# EUROPEAN PATENT APPLICATION

(11) **EP 4 368 863 A1**
(43) Date of publication of application: **15.05.2024**
(21) Application number: 22207046.8
(22) Date of filing: 11.11.2022
(51) Int. Cl.: F16K 31/02, F16K 31/52

(54) **ACTUATION UNIT FOR A MULTI VALVE DEVICE AND MULTI VALVE DEVICE**

(71) Applicant: memetis GmbH, 76185 Karlsruhe (DE)
(72) Inventor: Oßmer, Hinnerk, 76135 Karlsruhe (DE); Megnin, Christof, 67346 Speyer (DE); Gültig, Marcel, 76187 Karlsruhe (DE); Friderich, Daniel, 76133 Karlsruhe (DE)
(74) Representative: Altmann Stößel Dick Patentanwälte PartG mbB

(57) **Abstract**

An actuation unit (120) for a multi valve device (100) is proposed, the multi valve device (100) comprising a fluidic unit (102) comprising at least one fluid channel (104) and a plurality of valves (110, 110'), wherein the valves (110, 110') are configured to selectively block or open the fluid channel (104). The actuation unit (120) comprises a housing (126) and at least one actuator module (128). The housing (126) is configured to receive a plurality of actuator modules (128). The at least one actuator module (128) is received within the housing (126). The actuator module (128) comprises at least one actuator (130, 130') made at least partially of a smart material and at least one valve actuation member (132, 132'). The actuator (130, 130') is configured to move at least one valve actuation member (132, 132') such that at least one of the valves (110, 110') selectively blocks or opens the fluid channel (104). The actuation unit (120) is connectable to the fluidic unit (102). Further, a multi valve device (100) and a fluid handling device (196) are proposed.

## Description

### Technical Field

The present invention relates to an actuation unit for a multi valve device. The present invention further relates to a multi valve device comprising a fluidic unit and an actuation unit. The present invention further relates to a fluid handling device.

### Background art

The precise and contamination-free handling of very small quantities of liquids, i.e. liquid handling, is of great importance in a wide range of medical, scientific and industrial applications. From the point of view of medical/clinical diagnostics, major challenges arise in liquid handling, especially when a large number of different fluids, e.g. reagents, chemicals, samples, have to be handled. In medical diagnostics, for example, contamination and mix-up of samples must be prevented. On the other hand, there are many applications where only very small sample quantities are available, which must not be diluted too much in the process, e.g. single cell analysis, polymerase chain reaction, protein analysis/research, genetic engineering, production of pharmaceuticals.

The traditional approaches for solving these challenges often consist of dispensing the relevant fluids into corresponding sample containers one after the other by means of pipetting. This is time consuming and requires either trained personnel or specialized robots to ensure safe and error-free operation. In addition, due to the high requirements regarding the prevention of contamination, disposables are predominantly used as sample containers, pipette tips, etc., which is expensive and may lead to environmental pollution.

As an alternative, the same or similar processes may be realized by active microfluidics in closed fluid circuits. The switching and distribution of fluids is accomplished by means of pumps as well as electrically controlled valves. At present, such fluid handling tasks are mostly addressed either by rotary valves or by assemblies of individual valves, e.g. solenoid valves, both of which have a limited miniaturization potential as well as other drawbacks.

A rotary valve works like a slide valve, typically on the basis of a sealing body with internal channels, which can be rotated by an actuator against a plane with inlet and outlet channels, thereby allowing to open/close or interconnect different channels. The advantage of such an assembly is the very low internal volume and especially the complete avoidance of dead volumes. However, in order to properly seal a slide valve, a strong motor having high installation space and high energy consumption is required, which often operates quite slow. Moreover, the number of accessible channel combinations, i.e. channel combinatorics, is usually very limited, since all connection channels need to be defined a-priori and integrated in the rotary sealing body.

Systems based on individual valves connected to a fluidic circuit provide full combinatorial flexibility with respect to channel combination and they operate much faster than rotary valves. However, they usually have large dimensions, high prices, as well as a large internal volume including non-rinseable dead volumes. The valves are typically solenoid valves, but pneumatically operated valves are also used on the laboratory scale. The latter allow smaller internal volumes but require an additional pressure source and pilot valves.

A first approach for overcoming the abovementioned drawbacks is to use smaller individual valves in microfluidic circuits, which allow for shorter connection channels. From US 5325880 A and US 2019/353269 A1, it is known that extremely compact valves can be built up with shape memory alloys (SMA) instead of solenoid actuators. US 9555410 B2 discloses a shape memory alloy operated valve which can be connected to an electronic board by means of a magnetic connector.

A second approach aiming at minimization of the total internal volume of a multiport valve connecting multiple fluid reservoirs is to integrate a plurality of seat valves or sealing valves within a common channel such as is known from US 5803105 A. Different channel arrangements have been proposed, including zig-zag channel such as is known from DE 2413703 C3, membrane field such as is known from DE 3508162 C1, or matrix arrangement such as is known from DE 4325471 B4. The valves are typically operated by bulky external solenoid actuators such as is known from US 4597412 A. However, these require considerable installation space, are prone to magnetic cross talk and may dissipate too much heat into the system and the fluids to be controlled.

### Problem to be solved

It is therefore desirable to provide an intelligent fluidic multiplexer, e.g, dispenser/dosing unit, that specifically addresses the requirements of precise handling of multiple fluids. "Multiplexer" here refers to a system that can connect "X" input channels to "Y" output channels and thereby permits all conceivable combinations of open and closed channels, wherein "X" and "Y" are integers of one or greater.

### Summary

This problem is addressed by an actuation unit, a multi valve device and a fluid handling device with the features of the independent claims. Advantageous embodiments which might be realized in an isolated fashion or in any arbitrary combinations are listed in the dependent claims as well as throughout the specification.

As used in the following, the terms "have", "comprise" or "include" or any arbitrary grammatical variations thereof are used in a non-exclusive way. Thus, these terms may both refer to a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

Further, it shall be noted that the terms "at least one", "one or more" or similar expressions indicating that a feature or element may be present once or more than once typically will be used only once when introducing the respective feature or element. In the following, in most cases, when referring to the respective feature or element, the expressions "at least one" or "one or more" will not be repeated, non-withstanding the fact that the respective feature or element may be present once or more than once.

Further, as used in the following, the terms "preferably", "more preferably", "particularly", "more particularly", "specifically", "more specifically" or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in such way with other optional or non-optional features of the invention.

Further, it shall be noted that the terms "first", "second", "third" or similar expressions are merely used for distinguishing constructional members or features. These terms are not used for indicating any specific order of importance or limit these features and constructional members to a specific number of presences. Hereinafter, the respective features and constructional members having one or more equivalents are indicated by indices ', ".

According to a first aspect of the present disclosure, there is provided an actuation unit for a multi valve device. The multi valve device comprises a fluidic unit comprising at least one fluid channel and a plurality of valves. The valves are configured to selectively block or open the fluid channel. The actuation unit comprises a housing and at least one actuator module. The housing is configured to receive a plurality of actuator modules. The at least one actuator module is received within the housing. The actuator module comprises at least one actuator made at least partially of a smart material and at least one valve actuation member. The actuator is configured to move the at least one valve actuation member such that at least one of the valves selectively at least partially blocks or opens the fluid channel. The actuation unit is connectable to the fluidic unit.

Thus, an actuation unit for a multi valve device is provided which is configured to control a plurality of valves of a fluidic unit of the multi valve device. Particularly, the actuation unit of the present invention has advantages in that it is configured to receive a plurality of actuator modules. The number of actuator modules may be selected as appropriate. Thus, the actuation unit even allows to vary the number of actuator modules depending on the respective application. Further, the actuator modules of the actuation unit each have one or more actuators made of a smart material. Such materials are advantageous in that the actuator can vary its properties as smart materials have one or more properties that can be significantly changed in a controlled fashion by external stimuli. Thereby, the actuator is allowed to vary its shape and dimensions to a certain extension in a controlled manner so as to cause a movement of a further constructional member. This movement of the further constructional member may cause an action such as switching between at least two different positions or gradual and/or full linear and curved movement. It is explicitly stated that such gradual movement caused by the smart material of the actuator may be used for implementation of an actuator assembly that may be operated by open-loop or closed-loop control, e.g. a proportional valve (e.g. for dosing) or a mixing valve. Particularly, the movement caused by the actuator is used to control the position of the valve actuation member which in turn may be used to control the state of one or more valves of the fluidic unit. Further, making the actuator of a smart material allows to miniaturize the actuator. Furthermore, the actuation unit is connectable to the fluidic unit such that both parts may be easily combined to one integrated unit and thereby interact.

Particularly, the at least one actuator is at least partially made of a shape memory material. Thus, the actuator modules of the actuation unit each have one or more actuators made of a shape memory material. Such materials are advantageous in that the actuator can exist in two different phases enabling different shapes and structures, respectively. As these phases have different geometries, shapes or structures, the actuator is allowed to cause a movement of a further constructional member to a certain extension. This movement of the further constructional member may be used to cause an action such as switching between at least two different positions or gradual and/or full linear and curved. It is explicitly stated that such gradual movement caused by the shape memory actuator may be used for implementation of an actuator assembly that may be operated by open-loop or closed-loop control, e.g. a proportional valve (e.g. for dosing) or a mixing valve. Particularly, the movement of the actuator is used to control the position of the valve actuation member which in turn may be used to control the state of one or more valves of the fluidic unit. Further, making the actuator of a shape memory material allows to miniaturize the actuator. Furthermore, the actuation unit is connectable to the fluidic unit such that both parts may be easily combined to one integrated unit and thereby interact.

The shape memory material may be a shape memory alloy. The shape memory allow may be a NiTi or a NiTi-based ternary or quaternary alloy, particularly TiNiCu, TiNiHf, TiNiFe, TiNiCr. Such materials are well suitable for the application of the present invention and can be well processed.

The actuation unit may be reversibly or releasably connectable to the fluidic unit. For example, the actuation unit may be releasably connectable to the fluidic unit by means of at least one screw, magnet, snap-fit device, clamping device, latch device or locking device. Thus, the actuation unit may be released from the fluidic unit for maintenance, repair or replacement purposes.

The actuator module may be releasably received within the housing. Thus, the actuator module may be released from the housing for maintenance, repair, (re-)configuration or replacement purposes.

The actuator may be formed substantially planar or flat. Alternatively, the actuator may be formed substantially wire-shaped. Thus, the actuator may be formed rather flat, thin or rather compact. Needless to say, the actuator may have any shape as appropriate.

The actuator may comprise a thickness of 10 µm to 500 µm, preferably 15 µm to 180 µm and more preferably 20 µm to 50 µm. Thus, the actuator may be formed small. This further allows the actuator to release heat quickly due to a high aspect-to-volume ratio and therefore provide fast actuation response. In case, the actuator has a wire shape, the thickness is defined as its diameter.

The actuation module may comprise a frame portion. The frame portion may comprise a front surface. The valve actuation member may be linearly moveable with respect to the front surface at least between an inner position, in which the valve actuation member is at least partially retracted into an interior of the frame portion, and an outer position, in which the valve actuation member at least partially protrudes from the front surface and away from the frame portion. Thus, the valve actuation member may be selectively retracted into the frame portion and thus operate the valve(s).

The frame portion may define at least one guide configured to linearly guide the valve actuation member. Thus, the valve actuation member may be exactly linearly moved.

The valve actuation member may have a cylindrical, spherical or wedge shape. Thus, the shape of the valve actuation member may be selected as appropriate depending on the respective application.

The actuator module may further comprise at least two actuators made of a smart material. The at least two actuators may be biased in opposite directions with respect to one another. Thus, the actuators may be arranged in an antagonistic manner. Thereby, the actuators are alternately biased to a stable final movement position.

The actuator module may further comprise a rocker member mechanically coupling the two valve actuation members such as by contacting or engaging. The at least one actuator may be coupled to the rocker. Thus, a single actuator may be used to operate the valve actuation members in opposite directions. Alternatively, two actuators may be connected to the rocker in an antagonistic manner.

The actuator module may further comprise at least one spring configured to bias at least one valve actuation member towards a predetermined position. Thus, the valve actuation member may be forced to a stable position.

The actuator module may further comprise at least two valve actuation members. The actuator may be configured to selectively move at least one of the two valve actuation members. Thus, a single actuator may operate more than one valve actuation member.

The actuator module may further comprise a rocker member mechanically coupling the two valve actuation members. The actuator may be coupled to the rocker. Thus, a single actuator may be used to operate the valve actuation members.

The rocker member may mechanically couple the two valve actuation members such that the two valve actuation members are moveable in opposite directions. Thus, a single actuator may be used to operate the valve actuation members in opposite directions.

The actuator module may further comprise at least one spring coupled to the rocker. The spring may be configured to bias the rocker member towards a predetermined rocker member position such that one of the two valve actuation members is biased towards a predetermined valve actuation member position. Thus, the valve actuation member may be forced to a stable position.

The actuator module may further comprise at least one magnet member, such as a permanent magnet. The magnet member may be configured to hold the rocker member at a predetermined position. The predetermined position may be one of at least two stable positions. Thus, the valve actuation member may be held at a stable position.

The actuator module may further comprise at least two actuators made of a smart material. One of the actuators may be associated with one of the at least two valve actuation members. Thus, each valve actuation member of the actuator module may be independently operated from the other valve actuation member.

The actuator module may further comprise at least one magnet member, particularly a permanent magnet. The magnet member may be configured to hold at least one of the two valve actuation members at a predetermined position. The predetermined position may be one of at least two stable positions. Thus, the valve actuation member may be held at a stable position.

The actuation unit may further comprise an electronic circuit board. The electronic circuit board may comprise at least one power source. The power source may be an external power source connected by cable, an integrated battery and/or an inductive charging interface.

Alternatively or in addition, the electronic circuit board may comprise at least one interface device configured to communicate with an external electronic device. The interface device may be configured to communicate with the external electronic device in a digital, wire-based and/or wireless manner.

Alternatively or in addition, the electronic circuit board may comprise at least one button.

Alternatively or in addition, the electronic circuit board may comprise at least one screen.

Alternatively or in addition, the electronic circuit board may comprise a connector to an external power supply.

Thus, a single electronic circuit board may be used to provide different electronic components for controlling the actuation unit and its functions, especially in case the actuation unit comprises one or several actuator modules.

The actuation unit may comprise a plurality of actuator modules. Each of the actuators of the actuator modules may be electrically connected to the electronic circuit board. Thus, a single electronic circuit board may be used to control operation of more than one actuator module.

The electrical connection may be configured to allow a relative movement of the actuator modules and the electronic circuit board to each other, e.g. by means of spring contacts or cable connections. Thus, a permanent or reliable electrical contact is ensured.

The actuation unit may further comprise a circuit board having at least one circuit path. The actuator may be electrically connected to the circuit path.

The actuator may be permanently fixed to the circuit board and the circuit path by means of at least one fixing member. For example, the actuator may be permanently fixed to the circuit board and the circuit path by means of at least one rivet. Thus, a fixation which may be released only when destroying the same may be realized.

The electronic circuit board may be a circuit board. The circuit path may be configured to selectively supply power to the actuator module. Thus, the power supply may be designed very compact.

A predetermined number, particularly, at least two or all, of the actuator modules may be formed as a single, monolithic actuator module block. Thus, the actuator modules may be combined to a functional unit.

The actuation unit may further comprise at least one spring mechanism configured to bias the at least one actuator module towards a stop position within the housing. Thus, any potential deviations of the position of the actuator module within the housing may be compensated.

The interface device may include at least one device selected from USB, I2C, UART, Bluetooth, RFID, WLAN, Infrared device. Thus, external control of the actuator module is realized.

Each actuator module may be configured to implement a predetermined valve switching mode, particularly normally-open (NO), normally-closed (NC), proportional control, bistable or multistable. Thus, the present invention allows a broad range of operability.

The actuation unit may further comprise a display and/or an input device. Thus, control of the actuation unit is facilitated for a user.

The actuation unit may further comprise a position sensor configured to detect a position of the valve actuation member or the actuator is formed as a position sensor. The position sensor may be a Hall sensor, capacitive sensor, inductive sensor, resistive sensor, ultrasonic sensor, photodiode or laser. Thus, the position of the actuator may be observed and checked. The actuator may also provide a self-sensing of the valve actuation member. For example, the position may be determined by measuring the electrical resistance of the shape memory material.

The housing may comprise slots configured to receive a plurality of actuator modules in an array formation, preferably with even spacings between the valve actuation members, particularly wherein the spacings are defined by linear guide elements. Thus, the actuator modules may be arranged with even distances and at exactly defined positions.

According to a further aspect of the present disclosure, there is provided a multi valve device. The multi valve device comprises a fluidic unit comprising at least one fluid channel and a plurality of valves. The valves are configured to selectively control a branch of the fluid channel. The multi valve device further comprises at least one actuation unit according to any one of the embodiments as described before or hereinafter. The actuation unit is connected to the fluidic unit. Thus, the multi valve device basically consists of two components interacting with one another.

The multi valve device may further comprise at least one sealing member. Each of the valves may be covered by the sealing member. Thus, each valve may be covered by its own sealing member or all valves may be covered by a single sealing member providing a fluid tight arrangement.

The sealing member may be made of an elastomer. Thus, the sealing member may be formed flexible.

The sealing member may be a sealing membrane. Thus, the sealing member may be rather thin.

The valve actuation member may be configured to engage the sealing member so as to selectively block or open a valve within the fluid channel. Thus, the sealing member may be pressed onto a valve seat or removed therefrom so as to control the opening area of the channel.

The valves may be seat valves or diaphragm valves. Thus, different types of valves may be realized.

The fluidic unit may comprise a common inlet and/or a common outlet. All valves may be in fluid communication with the common inlet and/or the common outlet. Thus, different fluids may be mixed and controlled.

The valves may have openings comprising identical opening areas. Thus, even flow dimensions may be realized.

Alternatively, the valves may have openings comprising different opening areas. Thus, the flow dimensions may be varied.

The valves may comprise opening areas of the openings in a decreasing order. The opening area of a following opening may be half of the previous opening. Thus, the flow dimension may be varied in predefined steps.

The valves may be as arranged within capillaries of a capillary plate. Thus, the valves may be miniaturized.

The fluidic unit may be made of a transparent, biocompatible and chemically resistant polymer, particularly polycarbonate (PC), polymethylmethacrylate (PMMA), polystyrene (PS) or cyclic olefin copolymer (COC), or is made of glass. Such materials are well suitable for a broad range of different fluids. Optically transparent materials allow the operation of the fluidic unit to be observed.

The actuation unit and the fluidic unit may be connected to one another so as to interact at a common interface plane. Thus, the interaction area is a plane allowing to facilitate the operability.

The multi valve device may further comprise alignment members configured to align the valves from the fluidic unit with the valve actuation members from the actuation unit. Thus, exact positions for the fluidic unit and the actuation unit are defined ensuring that the valve actuation members properly operate the valves.

The fluidic unit may be formed as a microfluidic chip or cartridge. Thus, the fluidic unit may be rather compact.

The fluidic unit may comprise a window, integration interfaces for sensors, bubble traps, fluid compartments and/or blister.

The fluid channels may be formed as mixing channels allowing mixing of different input fluids. Thus, a mixing process of different fluids may be realized.

Alternatively or in addition, the fluidic unit may comprise passive check valves.

Alternatively or in addition, the fluidic unit may comprise an interface for a heating and/or cooling unit or heat exchanger. Thus, the condition of the fluid(s) may be adjusted.

According to a further aspect of the present disclosure, there is provided a fluid handling device comprising a multi valve device according to any one of the embodiments as described before or hereinafter, and at least one fluid source, wherein the fluidic unit is in fluid communication with the at least one fluid source.

The fluid handling device may further comprise at least one pump, fluid reservoir and/or fluid line configured to supply a fluid from the fluid source to the fluidic unit.

The fluid handling device may be a portable device. Alternatively, the fluid handling device may be a stationary device.

The pump may be an on-chip membrane pump formed by a membrane pump chamber having a membrane pump inlet and a membrane pump outlet covered by a membrane within the fluidic unit, and a membrane pump actuator module within the actuation unit having an inlet valve plunger, an outlet valve plunger and pump plunger.

The term "fluidic unit" as used herein is a broad term and is to be given its ordinary and customary meaning to a person of ordinary skill in the art and is not to be limited to a special or customized meaning. The term specifically may refer, without limitation, to a device configured for directing a plurality of fluid flows (liquid or gas). It comprises a number of X (at least one) inlets, a number of Y (at least one) outlets, a plurality of valves as well as a plurality of internal channels forming the internal logic of the application-specific fluid control task.

The term "actuation unit" as used herein is a broad term and is to be given its ordinary and customary meaning to a person of ordinary skill in the art and is not to be limited to a special or customized meaning. The term specifically may refer, without limitation, to a device configured for providing active control over the valves within the fluidic unit.

The term "actuator" as used herein is a broad term and is to be given its ordinary and customary meaning to a person of ordinary skill in the art and is not to be limited to a special or customized meaning. The term specifically may refer, without limitation, to an arbitrary element which is configured to move or control a mechanism or a system. The actuator may be operated by a source of energy, typically electric current or heat.

The term "smart material" as used herein is a broad term and is to be given its ordinary and customary meaning to a person of ordinary skill in the art and is not to be limited to a special or customized meaning. The term specifically may refer, without limitation, to any material that has one or more properties that can be significantly changed in a controlled fashion by external stimuli, such as stress, moisture, electric or magnetic fields, light, temperature, pH, or chemical compounds. Smart materials are the basis of many applications, including sensors and actuators, or artificial muscles, particularly as electroactive polymers. Terms used to describe smart materials include shape memory material (SMM) and shape memory technology. There are a number of types of smart material, of which are already common. Some non-exhaustive examples are piezoelectric materials, shape-memory alloys, shape-memory polymers, photovoltaic materials or optoelectronics, electroactive polymers, magnetostrictive materials, magnetic shape memory, and temperature-responsive polymers.

The term "shape memory material" as used herein is a broad term and is to be given its ordinary and customary meaning to a person of ordinary skill in the art and is not to be limited to a special or customized meaning. The term specifically may refer, without limitation, to any material that has the ability to return from a deformed state (temporary shape) to its original (permanent) shape induced by an external stimulus (trigger), such as temperature change. Such shape memory material may be shape-memory polymers (SMPs) or shape-memory alloys (SMAs). For example, a shape-memory alloy is an alloy that can be deformed when cold but returns to its pre-deformed ("remembered") shape when heated. Shape-memory polymers differ from shape memory alloys by their glass transition or melting transition from a hard to a soft phase which is responsible for the shape-memory effect. In shape-memory alloys martensitic/austenitic transitions are responsible for the shape-memory effect.

The term "actuator module" as used herein is a broad term and is to be given its ordinary and customary meaning to a person of ordinary skill in the art and is not to be limited to a special or customized meaning. The term specifically may refer, without limitation, to an arbitrary element built up by at least an actuator and a valve actuation member in a modular manner.

The term "valve" as used herein is a broad term and is to be given its ordinary and customary meaning to a person of ordinary skill in the art and is not to be limited to a special or customized meaning. The term specifically may refer, without limitation, to a device or object that regulates, directs or controls the flow of a fluid (gases, liquids, fluidized solids, or slurries) by opening, closing, or partially obstructing various passageways or channels. In an open valve, fluid flows in a direction from higher pressure to lower pressure. The main parts of the most usual type of valves are the valve member, the body, and the bonnet, lid or cover. These latter two parts form the casing that holds the fluid going through the valve.

The term "valve actuation member" as used herein is a broad term and is to be given its ordinary and customary meaning to a person of ordinary skill in the art and is not to be limited to a special or customized meaning. The term specifically may refer, without limitation, to a device that operates or moves the valve member so as to regulate, direct or control the flow of a fluid by opening, closing, or partially obstructing a passageway or channel.

The term "planar" as used herein is a broad term and is to be given its ordinary and customary meaning to a person of ordinary skill in the art and is not to be limited to a special or customized meaning. The term specifically may refer, without limitation, to a substantially plane shape. With other words, a planar shape is a shape without significant projections or depressions or curvatures.

The term "flat" as used herein is a broad term and is to be given its ordinary and customary meaning to a person of ordinary skill in the art and is not to be limited to a special or customized meaning. The term specifically may refer, without limitation, to a shape having a thickness significantly smaller than its length and width such as by a factor of at least 10, preferably at least 20, more preferably at least 50 and even more preferably at least 100.

The term "biased" as used herein is a broad term and is to be given its ordinary and customary meaning to a person of ordinary skill in the art and is not to be limited to a special or customized meaning. The term specifically may refer, without limitation, to a pre-strained state of shape. With other words, a biased structure or element is deflected with respect to its initial shape (without external forces) and in case of shape memory material the memory shape.

The term "rocker member" as used herein is a broad term and is to be given its ordinary and customary meaning to a person of ordinary skill in the art and is not to be limited to a special or customized meaning. The term specifically may refer, without limitation, to a device or constructional member shaped similar to a lever or a beam and having a fulcrum between either sides.

The term "circuit board" as used herein is a broad term and is to be given its ordinary and customary meaning to a person of ordinary skill in the art and is not to be limited to a special or customized meaning. The term specifically may refer, without limitation, to any device suitable to support or carry circuit paths. Such an circuit board may be a common circuit board made of a rigid material, a circuit board made of a flexible material such as Kapton or a three-dimensional casing having circuit paths applied thereto.

The term "circuit path" as used herein is a broad term and is to be given its ordinary and customary meaning to a person of ordinary skill in the art and is not to be limited to a special or customized meaning. The term specifically may refer, without limitation, to a trace made of an electrically conductive material such as copper or gold which is configured to provide an electrical connection of at least two constructional members.

The term "permanently fixed", "permanently fix" or equivalents thereof as used herein is a broad term and is to be given its ordinary and customary meaning to a person of ordinary skill in the art and is not to be limited to a special or customized meaning. The term specifically may refer, without limitation, to a fixation not releasable or not releasable without destruction of the connection members. Such a permanent fixation is preferably a positive fit or positive locking. A non-limiting example for a permanent fixation is a fixation of two connection members by means of a rivet.

The term "rivet" as used herein is a broad term and is to be given its ordinary and customary meaning to a person of ordinary skill in the art and is not to be limited to a special or customized meaning. The term specifically may refer, without limitation, to a permanent mechanical fastener. Before being installed, a rivet consists of a smooth cylindrical shaft with a head on one end. The end opposite to the head is called the tail. On installation, the rivet is placed in a punched or drilled hole, and the tail is upset, or bucked (i.e., deformed), so that it expands to about 1.5 times the original shaft diameter, holding the rivet in place. In other words, the pounding or pulling creates a new "head" on the tail end by smashing the "tail" material flatter, resulting in a rivet that is roughly a dumbbell shape. To distinguish between the two ends of the rivet, the original head is called the factory head and the deformed end is called the shop head or buck-tail. This type of connection allows a simultaneous positive and non-positive connection to be achieved.

The term "circuit board" as used herein is a broad term and is to be given its ordinary and customary meaning to a person of ordinary skill in the art and is not to be limited to a special or customized meaning. The term specifically may refer, without limitation, to a laminated sandwich structure of conductive and insulating layers. The circuit board is preferably a printed circuit board (PCB) or printed wiring board (PWB). PCBs have two complementary functions. The first is to affix electronic components in designated locations on the outer layers by means of soldering. The second is to provide reliable electrical connections (and also reliable open circuits) between the component's terminals in a controlled manner often referred to as PCB design. Each of the conductive layers is designed with an artwork pattern of conductors (similar to wires on a flat surface) that provides electrical connections on that conductive layer. Another manufacturing process adds vias, plated-through holes that allow interconnections between layers. PCBs mechanically support electronic components using conductive pads in the shape designed to accept the component's terminals, and also electrically connect them using traces, planes and other features etched from one or more sheet layers of copper laminated onto and/or between sheet layers of a non-conductive substrate. Components are generally soldered onto the PCB to both electrically connect and mechanically fasten them to it. Printed circuit boards are used in nearly all electronic products and in some electrical products, such as passive switch boxes.

The term "electronic circuit board" as used herein is a broad term and is to be given its ordinary and customary meaning to a person of ordinary skill in the art and is not to be limited to a special or customized meaning. The term specifically may refer, without limitation, to any device suitable to support or carry circuit paths and electronic constructional members such as a voltage source, a microcontroller, a chip .and the like. Such a circuit board may be a common circuit board made of a rigid material, a circuit board made of a flexible material such as Kapton or a three-dimensional casing having circuit paths and electronic constructional members applied thereto.

The term "wire shaped" as used herein is a broad term and is to be given its ordinary and customary meaning to a person of ordinary skill in the art and is not to be limited to a special or customized meaning. The term specifically may refer, without limitation, to a wire form. A wire is a flexible strand of metal. Wire is commonly formed by drawing the metal through a hole in a die or draw plate. Usually cylindrical in geometry, wire can also be made in square, hexagonal, flattened rectangular, or other cross-sections. Thus, a wire form may refer to the form of a thin flexible thread or rod.

The term "multi valve device" as used herein is a broad term and is to be given its ordinary and customary meaning to a person of ordinary skill in the art and is not to be limited to a special or customized meaning. The term specifically may refer, without limitation, to a device configured to connect "X" (at least one) input channels to "Y" (at least one) output channels and thereby may permit all conceivable combinations of open and closed channels. The multi valve device has a modular design consisting of the fluidic unit designed as a fluid-carrying chamber and the actuation unit. The fluidic unit and the actuation unit are separated from each other such as by means of a media-resistant membrane. Due to a special design of the fluid-carrying part, which takes over the function of the valve channel and the valve seats, the multi valve device has a complete flushability and a minimum internal volume.

The term "fluid handling device" as used herein is a broad term and is to be given its ordinary and customary meaning to a person of ordinary skill in the art and is not to be limited to a special or customized meaning. The term specifically may refer, without limitation, to a device configured to handle, direct and control a plurality of fluid flows. Such fluid handling devices have a broad range of applications ranging from medical devices to chemical devices. Particular and non-limiting examples for potential applications are automated liquid handling, general fluidic combinatorics, dosing of liquids or gases, mixing of liquids or gases, control positive/negative difference pressures, multivalve for channel selection (X inlets towards one outlet), multivalve for channel distribution (one inlet towards Y outlets), fluidic multiplexing (grid scheme with X inlets and Y outlets), automatization of a well plate (e.g. 96-well plate) experiments, operation of disposable microfluidic cartridges, medical tests, environmental analysis, food and beverage analysis, cell culture, lab-on-chip, organ-on-chip, PCR (polymerase chain reaction), peptide synthesis / analysis, pipetting / filling of well plates, vacuum gripper, "digital brush" / "pixel", discrete flow regulation, personalized medicine: mixing and dosing of drugs and drug components, mixing and dosing of chemicals, analytes, reagents, nutritious solutions, cell culture media, rinsing solutions, mixing and dosing of food, aroma, scents, vitamins, colorants, ingredients, 3D printing resins (resins in general), point-of-need testing (e.g. for diseases).

Particular and non-limiting examples for potential applications are automated liquid handling, general fluidic combinatorics, dosing of liquids or gases, mixing of liquids or gases, control positive/negative difference pressures, multivalve for channel selection (X inlets towards one outlet), multivalve for channel distribution (one inlet towards Y outlets), fluidic multiplexing (grid scheme with X inlets and Y outlets), automatization of a wellplate (e.g. 96-well plate) experiments, operation of disposable microfluidic cartridges, medical tests, environmental analysis, food and beverage analysis, cell culture, lab-on-chip, organ-on-chip, PCR (polymerase chain reaction), peptide synthesis / analysis, pipetting / filling of well plates, vacuum gripper, "digital brush" / "pixel", discrete flow regulation, personalized medicine: mixing and dosing of drugs and drug components, mixing and dosing of chemicals, analytes, reagents, nutritious solutions, cell culture media, rinsing solutions, mixing and dosing of food, aroma, scents, vitamins, colorants, ingredients, 3D printing resins (resins in general), point-of-need testing (e.g. for diseases).

Summarizing and without excluding further possible embodiments, the following embodiments may be envisaged:
Embodiment 1: An actuation unit for a multi valve device comprising a fluidic unit comprising at least one fluid channel and a plurality of valves, wherein the valves are configured to selectively block or open the fluid channel, wherein the actuation unit comprises a housing and at least one actuator module, wherein the housing is configured to receive a plurality of actuator modules, wherein at least one actuator module is received within the housing, wherein the actuator module comprises at least one actuator made at least partially of a smart material, and at least one valve actuation member, wherein the actuator is configured to move at least one valve actuation member such that at least one of the valves selectively blocks or opens the fluid channel, wherein the actuation unit is connectable to the fluidic unit.
Embodiment 2: The actuation unit according to the preceding embodiment, wherein the at least one actuator made at least partially of a shape memory material.
Embodiment 3: The actuation unit according to the preceding embodiment, wherein the shape memory material is a shape memory alloy.
Embodiment 4: The actuation unit according to the preceding embodiment, wherein the shape memory alloy is a NiTi or a NiTi-based ternary or quaternary alloy, particularly TiNiCu, TiNiHf, TiNiFe, TiNiCr.
Embodiment 5: The actuation unit according to any preceding embodiment, wherein the actuation unit is releasably connectable to the fluidic unit.
Embodiment 6: The actuation unit according to the preceding embodiment, wherein the actuation unit is releasably connectable to the fluidic unit by means of at least one screw, magnet, snap-fit device, clamping device, latch device or locking device.
Embodiment 7: The actuation unit according to any preceding embodiment, wherein the actuator module is releasably received within the housing.
Embodiment 8: The actuation unit according to any preceding embodiment, wherein the actuator is formed substantially planar, flat or wire-shaped.
Embodiment 9: The actuation unit according to any preceding embodiment, wherein the actuator comprises a thickness of 10 µm to 200 µm, preferably 15 µm to 180 µm and more preferably 20 µm to 50 µm.
Embodiment 10: The actuation unit according to any preceding embodiment, wherein the actuation module comprises a frame portion, wherein the frame portion comprises a front surface, wherein the valve actuation member is linearly moveable with respect to the front surface at least between an inner position, in which the valve actuation member is at least partially retracted into an interior of the frame portion, and an outer position, in which the valve actuation member at least partially protrudes from the front surface and away from the frame portion .
Embodiment 11: The actuation unit according to any preceding embodiment, wherein the frame portion defines at least one guide configured to linearly guide the valve actuation member.
Embodiment 12: The actuation unit according to any preceding embodiment, wherein the valve actuation member has a cylindrical, spherical or wedge shape.
Embodiment 13: The actuation unit according to any preceding embodiment, wherein the actuator module further comprises at least two actuators made of a smart material, wherein the at least two actuators are biased in opposite directions with respect to one another.
Embodiment 14: The actuation unit according to the preceding embodiment, the actuator module further comprises a rocker member mechanically coupling the two valve actuation members, wherein the at least one actuator is coupled to the rocker member.
Embodiment 15: The actuation unit according to any one of embodiments 1 to 12, the actuator module further comprises at least one spring configured to bias at least one valve actuation member towards a predetermined position.
Embodiment 16: The actuation unit according to any one of embodiments 1 to 12, the actuator module further comprises at least two valve actuation members, wherein the actuator is configured to selectively move at least one of the two valve actuation members.
Embodiment 17: The actuation unit according to the preceding embodiment, the actuator module further comprises a rocker member mechanically coupling the two valve actuation members, wherein the actuator is coupled to the rocker member.
Embodiment 18: The actuation unit according to the preceding embodiment, wherein the rocker member mechanically connects the two valve actuation members such that the two valve actuation members are moveable into opposite directions.
Embodiment 19: The actuation unit according to the preceding embodiment, the actuator module further comprises at least one spring connected to the rocker member, wherein the spring is configured to bias the rocker member towards a predetermined rocker member position such that one of the two valve actuation members is biased towards a predetermined valve actuation member position.
Embodiment 20: The actuation unit according to the preceding embodiment, wherein the actuator module further comprises at least one magnet member, particularly a permanent magnet, wherein the magnet member is configured to hold the rocker member at a predetermined position.
Embodiment 21: The actuation unit according to the preceding embodiment, wherein the predetermined position is one of two stable positions.
Embodiment 22: The actuation unit according to any one of embodiments 19 to 21, wherein the actuator module comprises at least two actuators made of a smart material, wherein one of the actuators is associated with one of the at least two valve actuation members.
Embodiment 23: The actuation unit according to the preceding embodiment, the actuator module further comprises at least one magnet member, particularly a permanent magnet, wherein the magnet member is configured to hold at least one of the two valve actuation members at a predetermined position.
Embodiment 24: The actuation unit according to the preceding embodiment, wherein the predetermined position is one of two stable positions.
Embodiment 25: The actuation unit according to any preceding embodiment, further comprising an electronic circuit board.
Embodiment 26: The actuation unit according to the preceding embodiment, wherein the electronic circuit board comprises at least one power source.
Embodiment 27: The actuation unit according to the preceding embodiment, wherein the power source is an external power source connected by cable, an integrated battery and/or an inductive charging interface.
Embodiment 28: The actuation unit according to any one of embodiment 25 to 27, wherein the electronic circuit board comprises at least one interface device configured to communicate with an external electronic device.
Embodiment 29: The actuation unit according to the preceding embodiment, wherein the interface device is an interface device configured to communicate with the external electronic device in a digital, wire-based and/or in a wireless manner.
Embodiment 30: The actuation unit according to any one of embodiment 25 to 29, wherein the electronic circuit board comprises at least one button.
Embodiment 31: The actuation unit according to any one of embodiment 25 to 30, wherein the electronic circuit board comprises at least one screen.
Embodiment 32: The actuation unit according to any one of embodiment 25 to 31, wherein the electronic circuit board comprises a connector to external power supply.
Embodiment 33: The actuation unit according to the preceding embodiment, wherein the actuation unit comprises a plurality of actuator modules, wherein each of the actuators of the actuator modules is separately electrically connected to the electronic circuit board.
Embodiment 34: The actuation unit according to the preceding embodiment, wherein the electrical connection is configured to allow a relative movement of the actuator modules and the electronic circuit board to each other.
Embodiment 35: The actuation unit according to the preceding embodiment, wherein the electrical connection is configured to allow a relative movement of the actuator modules and the electronic circuit board to each other by means of spring contacts or cable connections.
Embodiment 36: The actuation unit according to any preceding embodiment, further comprising a circuit board, wherein the circuit board comprises at least one circuit path, wherein the actuator is electrically connected to the circuit path.
Embodiment 37: The actuation unit according to the preceding embodiment, wherein the actuator is permanently fixed to the circuit board and the circuit path by means of at least one fixing member.
Embodiment 38: The actuation unit according to the preceding embodiment, wherein the actuator is permanently fixed to the circuit board and the circuit path by means of at least one rivet.
Embodiment 39: The actuation unit according to any of the two preceding embodiments, wherein the circuit path is configured to selectively supply power to the actuator module.
Embodiment 40: The actuation unit according to any one of the three preceding embodiments, wherein a predetermined number of the actuator modules are formed as a single, monolithic actuator module block.
Embodiment 41: The actuation unit according to the preceding embodiment, wherein the predetermined number is at least two or all of the actuator modules.
Embodiment 42: The actuation unit according to any preceding embodiment, further comprising at least one spring mechanism configured to bias the at least one actuator module towards a stop position within the housing.
Embodiment 43: The actuation unit according to the preceding embodiment, wherein the interface device includes at least one device selected from USB, I2C, Bluetooth, RFID, UART, SPI, WLAN device.
Embodiment 44: The actuation unit according to any preceding embodiment, wherein each actuator module is configured to implement a predetermined valve switching mode, particularly normally-open (NO), normally-closed (NC), proportional control, bistable or multistable.
Embodiment 45: The actuation unit according to any preceding embodiment, further comprising a display and/or an input device.
Embodiment 46: The actuation unit according to any preceding embodiment, further comprising a position sensor configured to detect a position of the valve actuation member.
Embodiment 47: The actuation unit according to any one of embodiments 1 to 46, wherein the actuator is formed as a position sensor.
Embodiment 48: The actuation unit according to embodiment 46 or 47, wherein the position sensor is a Hall sensor, capacitive sensor, inductive sensor, resistive sensor, ultrasonic sensor, photodiode or laser.
Embodiment 49: The actuation unit according to any preceding embodiment, wherein the housing comprises slots configured to receive a plurality of actuator modules in an array formation, preferably with even spacings between the valve actuation members.
Embodiment 50: The actuation unit according to any preceding embodiment, wherein the spacings are defined by linear guide elements.
Embodiment 51: The actuation unit according to any preceding claim, wherein a plurality of actuator modules are connected as a cascade by means of a predetermined number of electrical lines, wherein each actuator module is capable of receiving commands as well as sending commands/information by means of a digital communication protocol.
Embodiment 52: The actuation unit according to any preceding claim, further comprising a plurality of actuators arranged in at least one series, wherein each actuator is bypassed by an electronic switch configured to allow to selectively supply current to one or more of the actuators and to bypass one or more of the actuators with current.
Embodiment 53: A multi valve device, comprising a fluidic unit comprising at least one fluid channel and a plurality of valves, wherein the valves are configured to selectively control a branch of the fluid channel, and at least one actuation unit according to any preceding embodiment, wherein the actuation unit is connected to the fluidic unit.
Embodiment 54: The multi valve device according to the preceding embodiment, further comprising at least one sealing member, wherein each of the valves is covered by the sealing member.
Embodiment 55: The multi valve device according to the preceding embodiment, wherein the sealing member is made of an elastomer.
Embodiment 56: The multi valve device according to any of the two preceding embodiments, wherein the sealing member is a sealing membrane.
Embodiment 57: The multi valve device according to any of the three preceding embodiments, wherein the valve actuation member is configured to engage the sealing member so as to selectively block or open a valve within the fluid channel.
Embodiment 58: The multi valve device according to any one of embodiments 54 to 58, wherein the valves are seat valves or diaphragm valves.
Embodiment 59: The multi valve device according to any one of embodiments 54 to 59, wherein the fluidic unit comprises a common inlet and a common outlet, wherein all valves are in fluid communication with the common inlet and the common outlet.
Embodiment 60: The multi valve device according to the preceding embodiment, wherein the valves have openings comprising identical opening areas.
Embodiment 61: The multi valve device according to any one of embodiments 54 to 61, wherein the valves have openings comprising different opening areas.
Embodiment 62: The multi valve device according to the preceding embodiment, wherein the valves comprise opening areas of the openings of in a decreasing row or order, wherein the opening area of a following opening is half of the previous opening.
Embodiment 63: The multi valve device according to any one of embodiments 54 to 63, wherein the valves are as arranged within capillaries of a capillary plate.
Embodiment 64: The multi valve device according to any one of embodiments 54 to 64, wherein the fluidic unit is made of a transparent, biocompatible and chemically resistant polymer.
Embodiment 65: The multi valve device according to the preceding embodiment, wherein the polymer is polycarbonate (PC), polymethylmethacrylate (PMMA), polystyrene (PS) or cyclic olefin copolymer (COC).
Embodiment 66: The multi valve device according to any one of embodiments 54 to 66, wherein the fluidic unit is made of glass.
Embodiment 67: The multi valve device according to any one of embodiments 54 to 67, wherein the actuation unit and the fluidic unit are connected in a way to interact at a common interface plane.
Embodiment 68: The multi valve device according to any one of the embodiments referring to a multi valve device, further comprising alignment members configured to align the valves from the fluidic unit with the valve actuation members from the actuation unit.
Embodiment 69: The multi valve device according to any one of the embodiments referring to a multi valve device, wherein the fluidic unit is formed as a microfluidic chip or cartridge.
Embodiment 70: The multi valve device according to any one of the embodiments referring to a multi valve device, wherein the fluidic unit is made of an optically transparent material.
Embodiment 71: The multi valve device according to any one of the embodiments referring to a multi valve device, wherein the fluidic unit comprises a window, integration interfaces for sensors, bubble traps, fluid compartments and/or blister.
Embodiment 72: The multi valve device according to any one of the embodiments referring to a multi valve device, wherein the fluid channels are formed as mixing channels allowing mixing of different input fluids.
Embodiment 73: The multi valve device according to any one of the embodiments referring to a multi valve device, wherein the fluidic unit comprises passive check valves.
Embodiment 74: The multi valve device according to any one of the embodiments referring to a multi valve device, wherein the fluidic unit comprises an interface for a heating and/or cooling unit or heat exchanger.
Embodiment 75: A fluid handling device comprising a multi valve device according to any one of the embodiments referring to a multi valve device, and at least one fluid source, wherein the fluidic unit is in fluid communication with the at least one fluid source.
Embodiment 76: The fluid handling device according to the preceding embodiment, further comprising at least one pump, fluid reservoir and/or fluid line configured to supply a fluid from the fluid source to the fluidic unit.
Embodiment 77: The fluid handling device according to any one of the preceding embodiments referring to a medical device, wherein the medical device is a portable device or a stationary device.
Embodiment 78: The fluid handling device according to any one of the preceding embodiments referring to a fluid handling device, wherein the pump is an on-chip membrane pump formed by a membrane pump chamber having a membrane pump inlet and a membrane pump outlet covered by a membrane within the fluidic unit, and a membrane pump actuator module within the actuation unit having an inlet valve plunger, an outlet valve plunger and a pump plunger.

### Short description of the Figures

Further optional features and embodiments will be disclosed in more detail in the subsequent description of embodiments, preferably in conjunction with the dependent claims. Therein, the respective optional features may be realized in an isolated fashion as well as in any arbitrary feasible combination, as the skilled person will realize. The scope of the invention is not restricted by the preferred embodiments. The embodiments are schematically depicted in the Figures. Therein, identical reference numbers in these Figures refer to identical or functionally comparable elements.

In the Figures:
- Figure 1: shows a perspective view of a multi valve device according to an embodiment of the present invention;
- Figure 2: shows a perspective exploded view of the multi valve device of Figure 1;
- Figure 3: shows a lateral view of the actuation unit;
- Figure 4: shows a perspective top view of the actuation unit;
- Figure 5: shows a lateral view of the fluidic unit;
- Figure 6: shows a perspective bottom view of the fluidic unit;
- Figure 7: shows a perspective view of a single channel actuator module;
- Figure 8: shows a perspective view of a dual channel actuator module;
- Figure 9: shows a perspective view of a further single channel actuator module in a first operation state;
- Figure 10: shows a cross-sectional view of the single channel actuator module of Figure 9;
- Figure 11: shows a perspective view of the further single channel actuator module in a second operation state;
- Figure 12: shows a cross-sectional view of the single channel actuator module of Figure 11;
- Figure 13: shows a perspective view of a further single channel actuator module in a first operation state;
- Figure 14: shows a cross-sectional view of the single channel actuator module of Figure 13;
- Figure 15: shows a perspective view of the further single channel actuator module in a second operation state;
- Figure 16: shows a cross-sectional view of the single channel actuator module of Figure 15;
- Figure 17: shows a perspective view of a further single channel actuator module in a first operation state;
- Figure 18: shows a cross-sectional view of the single channel actuator module of Figure 17;
- Figure 19: shows a perspective view of the further single channel actuator module in a second operation state;
- Figure 20: shows a cross-sectional view of the single channel actuator module of Figure 19;
- Figure 21: shows a perspective view of a coupled dual channel actuator module in a first operation state;
- Figure 22: shows a cross-sectional view of the dual channel actuator module of Figure 21;
- Figure 23: shows a perspective view of the dual channel actuator module in a second operation state;
- Figure 24: shows a cross-sectional view of the dual channel actuator module of Figure 23;
- Figure 25: shows a perspective view of a coupled dual channel actuator module in a first operation state;
- Figure 26: shows a cross-sectional view of the dual channel actuator module of Figure 25;
- Figure 27: shows a perspective view of the dual channel actuator module in a second operation state;
- Figure 28: shows a cross-sectional view of the dual channel actuator module of Figure 27;
- Figure 29: shows a perspective exploded view of parts of a multi valve device according to a further embodiment of the present invention;
- Figure 30: shows a cross-sectional view of the multi valve device of Figure 29;
- Figure 31: shows a perspective exploded view of parts of a multi valve device according to a further embodiment of the present invention;
- Figure 32: shows a cross-sectional view of the multi valve device of Figure 31;
- Figure 33: shows a perspective exploded view of parts of a multi valve device according to a further embodiment of the present invention;
- Figure 34: shows a cross-sectional view of the multi valve device of Figure 33;
- Figure 35: shows a cross-sectional view of parts of an actuation unit according to a further embodiment of the present invention;
- Figure 36: shows a cross-sectional view of parts of an actuation unit according to a further embodiment of the present invention;
- Figure 37: shows a lateral view of a multi valve device according to a further embodiment of the present invention;
- Figure 38: shows a lateral view of a multi valve device according to a further embodiment of the present invention;
- Figure 39: shows a lateral view of a multi valve device according to a further embodiment of the present invention;
- Figure 40: shows a lateral view of a multi valve device according to a further embodiment of the present invention;
- Figure 41: shows a lateral view of a multi valve device according to a further embodiment of the present invention;
- Figure 42: shows a perspective view of a fluid handling device according to a further embodiment of the present invention in a first operation state;
- Figure 43: shows a perspective view of the fluid handling device of Figure 42 in a second operation state;
- Figure 44: shows a top view of a part of the fluid handling device of Figure 42;
- Figure 45: shows a perspective view of a part of the fluid handling device of Figure 42;
- Figure 46: shows a perspective bottom view of a part of the actuation unit of the fluid handling device of Figure 42;
- Figure 47: shows a lateral view of a part of the actuation unit of the fluid handling device of Figure 42;
- Figure 48: shows an enlarged perspective view of a part of the actuation unit of the fluid handling device of Figure 42;
- Figure 49: a schematical illustration of electrical components and connections of an actuation unit;
- Figure 50: a schematical illustration of a further embodiment of an actuation unit; and
- Figure 51: a schematical illustration of a further embodiment of an actuation unit.

### Detailed description of the embodiments

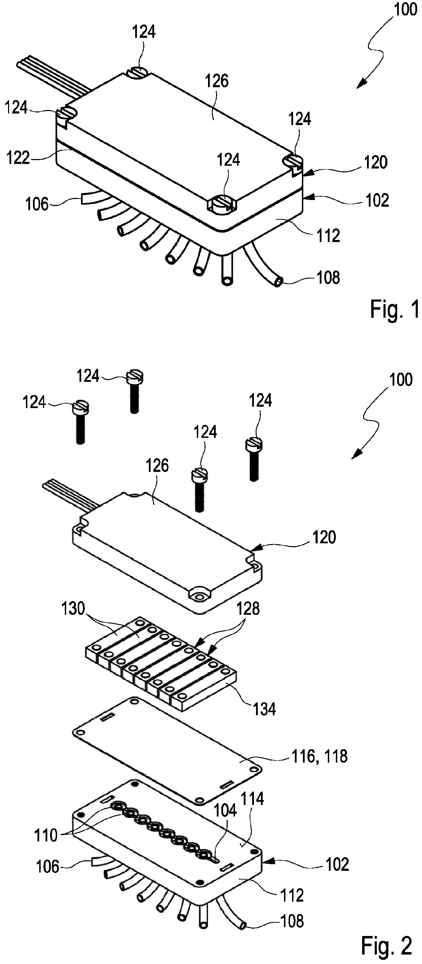

Figure 1 shows a perspective view of a multi valve device 100 according to an embodiment of the present invention. Figure 2 shows a perspective exploded view of the multi valve device 100 of Figure 1. The multi valve device 100 comprises a fluidic unit 102.

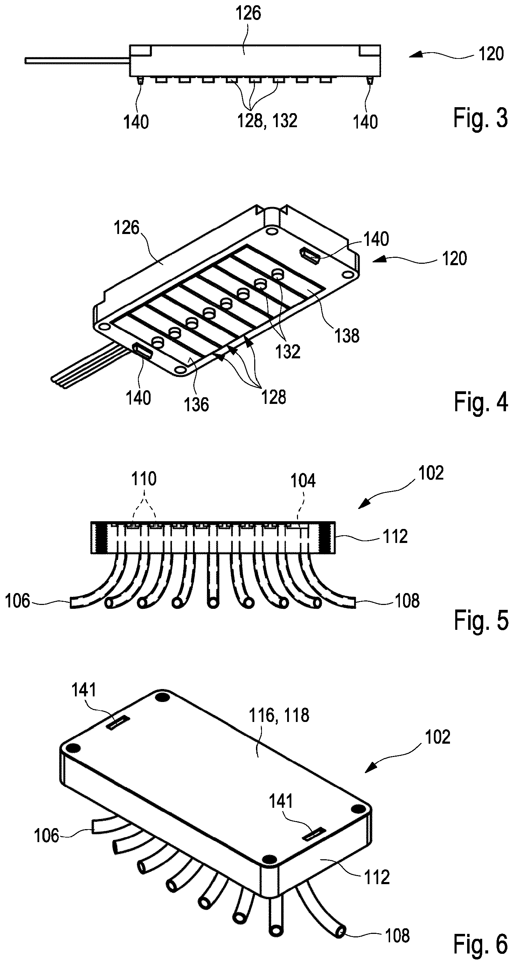

Figure 3 shows a side view of the fluidic unit 102. Figure 4 shows a perspective of the fluidic unit 102. The fluidic unit 102 comprises at least one fluid channel 104. The at least one fluid channel 104 is in fluid communication with at least one inlet 106 and at least one outlet 108. The fluidic unit 102 further comprises a plurality of valves 110. The valves 110 are configured to selectively control a branch of the fluid channel 104. The fluidic unit 102 comprises a fluidic body 112. The fluid channel 104 and the valves 110 are arranged within the fluidic body 112. Merely as an example, the fluidic body 112 comprises a substantially cuboid shape.

Each of the valves 110 allows to partially or fully interrupt the fluid flow in the at least one fluid channel 104. The valves 110 may be designed as seat valves or diaphragm valves. The valves 110 may be positioned in a symmetric pattern like a row or a grid to establish a particularly space-saving arrangement. In the present embodiment, the valves 110 are arranged in a row. The valves 110 are exposed to an upper side 114 of the fluidic body 112. Each valve 110 is covered by a flexible sealing member 116. The sealing member 116 is preferably made of an elastomer and may have a flat geometry such as a membrane or may have a three-dimensional geometry. Each valve 110 may have an individual sealing element 116 or alternatively as is shown, the sealing member 116 may extend over several or all valves 110. In the present embodiment, the sealing member 116 is a sealing membrane 118 covering all valves 110. Each sealing member 116 is designed to allow partially or fully interrupting the flow or "close the valve" in the at least one fluid channel 104, when being pressed towards the fluid channel 104 as will be described in further detail below. Preferably, the sealing member 116 is designed to be mechanically pre-strained so that it opens the valve 110 by its own force when it is not pressed. For applications with a risk of cross-contamination between experiments etc., the fluidic unit 102 can be designed to be disposable and to be exchanged on a regular basis.

As is further shown in Figures 1 and 2, the multi valve device 100 further comprises an actuation unit 120. The actuation unit 120 is connected to the fluidic unit 102. Particularly, the actuation unit 120 and the fluidic unit 102 are connected to one another so as to interact at a common interface plane 122 as will be described in further detail below. The actuation unit 120 is releasably connectable to the fluidic unit 102. In the present embodiment, the actuation unit 120 is releasably connectable to the fluidic unit 102 by means of at least one screw 124 such as four screws 124.

Figure 5 shows a side view of the actuation unit 120. Figure 6 shows a perspective view of the actuation unit 120. The actuation unit 120 comprises a housing 126 and at least one actuator module 128. Merely as an example, the housing 126 has a substantially square shape. The housing 126 is configured to receive a plurality of actuator modules 128. The at least one actuator module 128 is received within the housing 126. Particularly, the at least one actuator module 128 is releasably received within the housing 126. The housing 126 serves as a frame to position, hold and align the actuator modules 128. The concept of the actuation unit 120 is to be reusable, even in cases where the fluidic unit 102 is designed as a full or partial disposable part. No parts of the actuation unit 120 will be in direct contact to the fluids to be controlled by the multi valve device 100, so there is no risk of cross-contamination.

The actuator module 128 comprises at least one actuator 130 made at least partially of a smart material. The smart material is preferably a shape memory material such as a shape memory alloy, particularly NiTi or a NiTi-based ternary or quaternary alloy, particularly TiNiCu, TiNiHf, TiNiFe, TiNiCr. The actuator 130 is formed substantially planar. The actuator 130 is formed substantially flat. The actuator 130 comprises a thickness of 10 µm to 200 µm, preferably 15 µm to 180 µm and more preferably 20 µm to 50 µm such as 25 µm. The use of thin, structured shape memory alloys allows a high packing density as well as space and weight savings. The actuators 130 need less electrical drive power than conventional actuators such as solenoids, hence they limit heat introduction to the fluidic system, which is particularly important when handling biological sample material. The actuators 130 allow faster switching than wire-shaped actuators made of a shape memory material since they dissipate heat to its surroundings more efficiently.

The actuator module 128 further comprises at least one valve actuation member 132. The valve actuation member 132 has a cylindrical shape. Particularly, the valve actuation member 132 is shaped as a plunger in the present embodiment. The actuator 130 is configured to move the at least one valve actuation member 132 such that at least one of the valves 110 selectively blocks or opens the fluid channel 104 as will be described in further detail below. The actuation module 128 comprises a frame portion 134. The frame portion comprises a front surface 136. The valve actuation member 132 is linearly moveable with respect to the front surface 136 at least between an inner position, in which the valve actuation member 132 is at least partially retracted into an interior of the frame portion 134, and an outer position, in which the valve actuation member 132 at least partially protrudes from the front surface 136 and away from the frame portion 134. The frame portion 134 defines at least one guide 138 configured to linearly guide the valve actuation member 132.

The actuation unit 120 has the function of providing active control over the valves 110 within the fluidic unit 102. For this purpose, the actuation unit 120 comprises a plurality of actuation modules 128 designed to displace the valve actuation members and thereby control the degree of opening of each valve 110. The actuation unit 120 provides a means to individually activate each of the actuators 130. As mentioned, the actuators 130 are electrically conductive and their shape memory is activated by applying a heating current through the actuator. Alternatively, heating of the actuators may be provided by a laser, infrared light source, external resistive heater, induction coil or Peltier element. Each actuator module 128 implements a certain valve switching mode, e.g., normally-open (NO), normally-closed (NC), proportional control, bistable or multistable.

As is shown in Figures 4 and 6, in order to precisely align the valves 110 from the fluidic unit 102 with the corresponding valve actuation members 132 from the actuation unit 120, the actuation unit 120 comprises at least one alignment element 140 and the fluidic unit 102 comprises at least one alignment element counterpart 141 as shown in Figure 6.

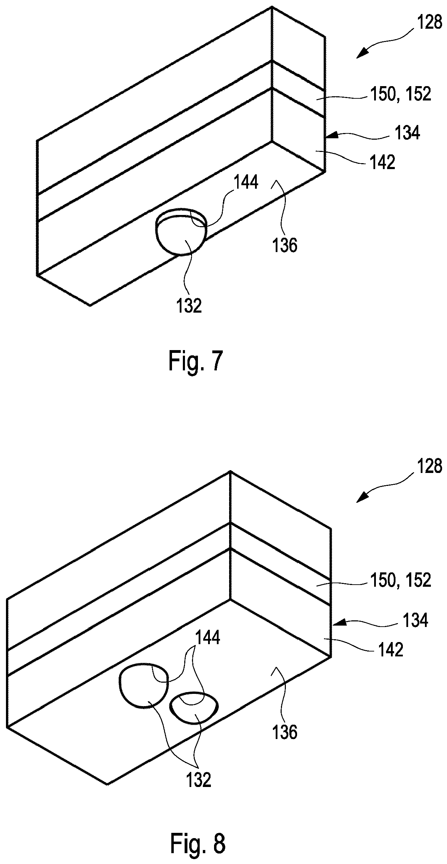

Figure 7 shows a perspective view of a single channel actuator module 128 that may be used with the actuation unit 120. The single channel actuator module 128 has a single valve actuation member 132. The valve actuation member 132 is guided in a bottom part 142 of the actuator module 128 within a valve actuation member guide 144 to assure stable linear movement with low friction.

Figure 8 shows a perspective view of a dual channel actuator module that may be used with the actuation unit 120. The dual channel actuator module 128 has two valve actuation members 132. Each valve actuation member 132 is guided in a bottom part 142 of the actuator module 128 within a valve actuation member guide 144 to assure stable linear movement with low friction.

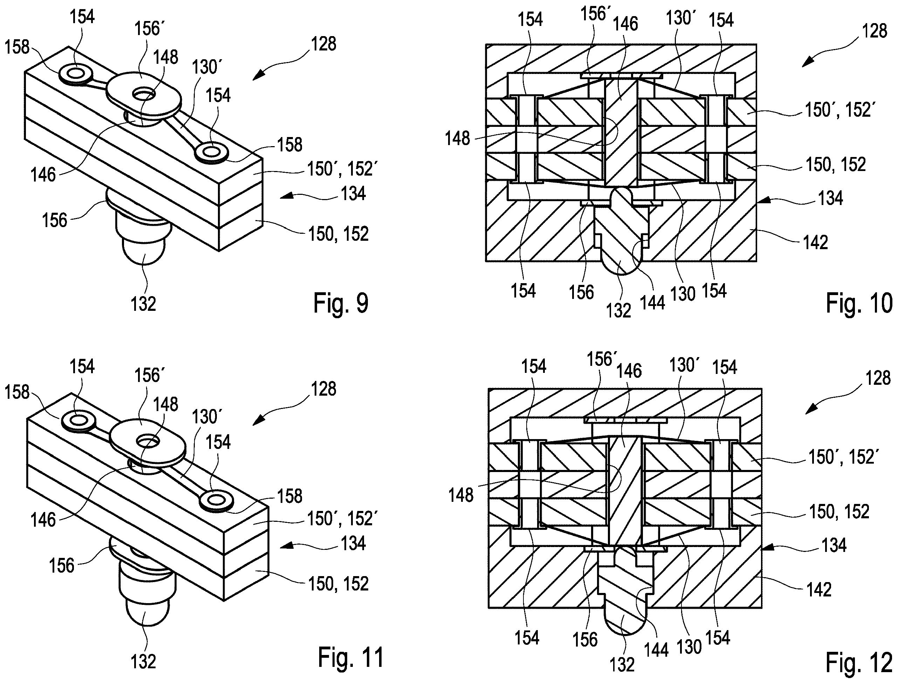

Figure 9 shows a perspective view of a further single channel actuator module that may be used with the actuation unit 120 in a first operation state. Figure 10 shows a cross-sectional view of the single channel actuator module of Figure 9. Figure 11 shows a perspective view of the further single channel actuator module in a second operation state. Figure 12 shows a cross-sectional view of the single channel actuator module of Figure 11.

Each valve actuation member 132 is guided in a bottom part 142 of the actuator module 128 within a valve actuation member guide 144 to assure stable linear movement with low friction. The valve actuation member 132 and the valve actuation member guide 144 are geometrically designed in such a way that the valve actuation member 132 can move between an inner limit position shown in Figures 9 and 10 and outer limit position shown in Figures 11 and 12. The outer limit position is defined so that in the fully assembled state with fluidic unit 102 and actuation unit 120 connected, the valve actuation member 132 is pushed out sufficiently far to reliably close its associated valve 110 within the fluidic unit 102. Similarly, the inner limit position is defined so that the valve actuation member 132 is retracted sufficiently far to fully open the associated valve 110.

The actuator module 128 further comprises at least two actuators 130, 130' made of a shape memory material. The at least two actuators 130, 130' are biased in opposite directions. Particularly, above the valve actuation member 132, a first actuator 130 is arranged in such a way, that it is pre-deflected from its memory shape towards the valve actuation member 132 and the interface plane 122, respectively. Above the first actuator 130, a permanent magnet 146 is located in a linear guidance 148, e.g. a through-hole, and above the permanent magnet 146, a second actuator 130' is arranged in such a way, that it is pre-deflected from its memory shape away from the valve actuation member 132 and the interface plane 122, respectively. The length of the permanent magnet 146 and the distance between the first actuator 130 and second actuator 130' is chosen in such a way, that the actuators 130, 130' form an antagonistic pair and that, if one actuator 130, 130' is transformed to its memory shape, e.g. by electrical heating, the other actuator 130, 130' is forced to deform into a deflected shape. The actuators 130', 130 may be mounted on circuit boards 150, 150' such as printed circuit boards 152, 152'. In the present embodiment, the actuators 130', 130 are permanently fixed to circuit boards 150, 150' by means of rivets 154. Two soft magnetic end stops 156, 156', i.e. a first soft magnetic end stop 156 and a second soft magnetic end stop 156', are arranged above and below the permanent magnet 146 in such a way, that they limit the linear movement stroke of the magnet 146 and hold it in a stable position either at the lower end stop 156 or the upper end stop 156'. The lower soft-magnetic end stop 156 is located below the lower actuator 130 and the upper soft-magnetic end stop 156' is located above the upper actuator 130'. The actuators 130, 130'and their pre-deflection are positioned and dimensioned in such a way, that each actuator 130, 130', if transferred to its memory shape e.g. by application of a short heating pulse, can overcome the magnetic force between permanent magnet 146 and soft-magnetic end stop 156' closest to the actuator 130, 130', move the magnet 146 to the opposing soft-magnetic end stop 156 and thereby deflect the opposing actuator 130, 130' into a deflected shape. This mechanism only requires power for switching between the two stable positions of the magnet 146. The lower soft-magnetic end stop 156 has an opening that allows physical contact of the valve actuation member 132 and the permanent magnet 146. The lower actuator 130 may or may not have a corresponding opening. The magnet 146 or the valve actuation member 132 are shaped in such a way that the magnet 146 in its lower stable position at end stop 156 holds the valve actuation member 132 at its inner limit position, i.e. in the closed-valve condition, shown in Figures 9 and 10. With the magnet 146 in its upper stable position at end stop 156', the valve actuation member 132 is free to move to its outer limit position shown in Figures 11 and 12. In the example, a portion of the valve actuation member 132 extends through the opening in lower end stop 156 to be in contact with a cylindrical magnet 146. The mechanical coupling could also be achieved by placing an additional mechanical component like a sphere between the valve actuation member 132 and the magnet 146.

The advantage of a single channel actuator module 128 with bistable functionality is that it can hold a valve 110 either open or closed for arbitrary time intervals without consuming any power. This is beneficial especially if power supply is limited, e.g. mobile use, battery operation, and/or if heat dissipation has to be minimal.

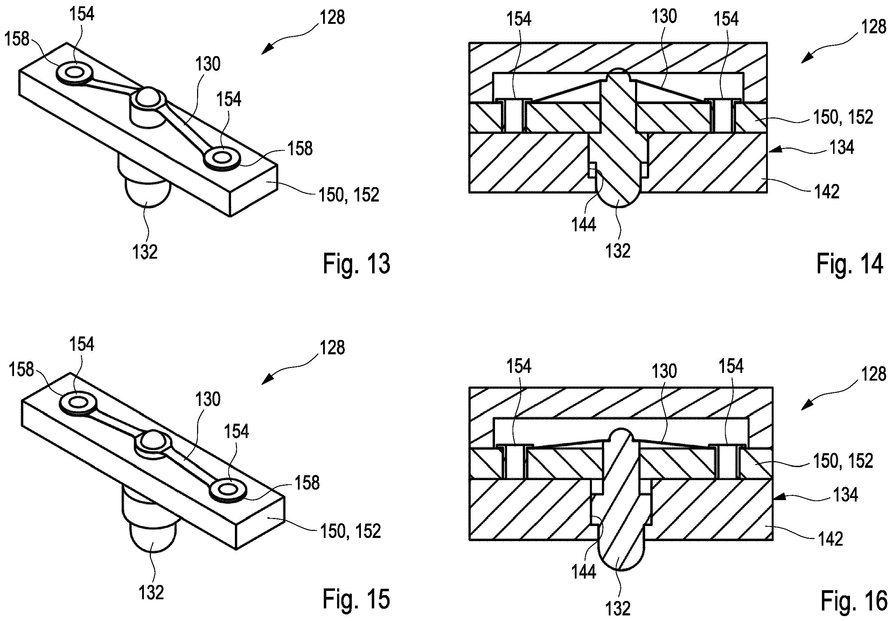

Figure 13 shows a perspective view of a further single channel actuator module 128 that may be used with the actuation unit 120 in a first operation state. Figure 14 shows a cross-sectional view of the single channel actuator module 128 of Figure 13. Figure 15 shows a perspective view of the further single channel actuator module 128 in a second operation state.

Figure 16 shows a cross-sectional view of the single channel actuator module 128 of Figure 15. Hereinafter, only the differences from the actuator module 128 shown in Figures 9 to 12 will be described and like constructional members and features are indicated by like reference numerals.

The actuator module 128 shown in Figures 13 to 16 comprises a single actuator 130 and a single valve actuation member 132. The single channel actuator module 128 has a normally open functionality. The Figure 14 shows a cross-sectional view of the actuator module 128 in an open state and Figure 16 shown the actuator module 128 in a closed state. The valve actuation member 132 is guided in the valve actuation member guide 144 within the bottom part 142 of the actuator module 128 in such a way, that it can freely move between an inner limit position shown in Figures 13 and 14 and an outer limit position shown in Figures 15 and 16. In a fully assembled multi valve device 100, the valve actuation member 132 at the inner limit position corresponds to a fully open valve 110 and the valve actuation member 132 at the outer limit position corresponds to a fully closed valve. Above the valve actuation member 132, the actuator 130 is arranged in such a way, that it is pre-deflected from its memory shape away from the valve actuation member 132 and the interface plane 122, respectively. The actuator 130 may be mounted on a circuit board 152 by means of rivets 154. The actuator 130 and its pre-deflection is positioned and dimensioned in such a way, that it can press the valve actuation member 132 down into its outer limit position, when heated, e.g. by a sufficiently high electrical heating current applied between its ends 158. When the current is removed, i.e. un-powered state of the actuator, the valve actuation member 132 can move to its inner limit position while deflecting the actuator 130 out of its memory shape with low force. Adjustment of the current supplied to actuator 130 also allows to establish intermediate positions of the valve actuation member 132 between its limit positions, e.g. in order to regulate a flow rate in a valve.

The advantage of a single channel actuator module 128 with normally open functionality is that it can hold a valve 110 open for arbitrary time intervals without consuming any power. This is beneficial especially if a valve 110 is required to be open most of the time, or a valve 110 is required to be open in case of power supply failure, e.g. for security reasons.

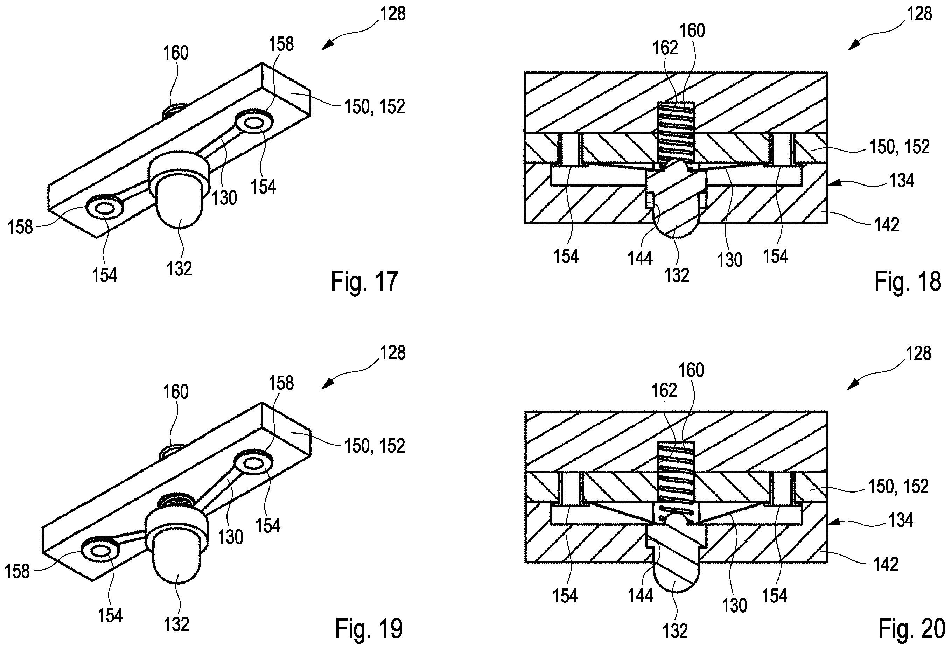

Figure 17 shows a perspective view of a further single channel actuator module 128 that may be used with the actuation unit 120 in a first operation state. Figure 18 shows a cross-sectional view of the single channel actuator module 128 of Figure 17. Figure 19 shows a perspective view of the further single channel actuator module 128 in a second operation state. Figure 20 shows a cross-sectional view of the single channel actuator module of Figure 19.

Hereinafter, only the differences from the actuator module 128 shown in Figures 9 to 12 will be described and like constructional members and features are indicated by like reference numerals.

The actuator module 128 shown in Figures 17 to 20 further comprises at least one spring 160 configured to bias at least one valve actuation member 132 towards a predetermined position. Particularly, Figures 17 to 20 shows an implementation example of a single channel actuator module 128 with normally closed functionality. The Figure 18 shows a cross-sectional view of the actuator module 128 in an open state and Figure 20 shown the actuator module 128 in a closed state. The valve actuation member 132 is guided in a valve actuation member guide 144 within the bottom part 142 of the actuator module 128 in such a way, that it can freely move between an inner limit position shown in Figures 17 and 18 and an outer limit position shown in Figures 19 and 20. In a fully assembled multi valve device 100, the valve actuation member 132 at the outer limit position corresponds to a fully closed valve and the valve actuation member 132 at the inner limit position corresponds to a fully open valve. Above the valve actuation member 132, an actuator 130 is arranged in such a way, that it is pre-deflected from its memory shape towards the valve actuation member 132 and the interface plane 122, respectively. The actuator 130 may be mounted on a circuit board 152 by means of rivets 154. Above the actuator 130, a spring 160 is located in a pocket 162 of the frame portion 134 in such a way, that it is pre-strained. An additional mechanical element like a ball (not shown in detail) may be placed between actuator 130 and spring 160 in order to reduce mechanical stress and risk of damage of the fragile actuator 130, or the spring 160 might directly be in contact with the actuator 130 as shown in Figures 17 to 20. The pre-strain of the spring 160 is dimensioned to provide enough force for pressing the valve actuation member 132 down to its outer limit position to hold a valve closed against a fluid pressure and at the same time deflect the actuator 130 out of its memory shape. The actuator 130 and its pre-deflection is positioned and dimensioned in such a way that it can press the lower end of the spring 160 upwards to further compress it when heated, e.g. by a sufficiently high electrical heating current applied between its ends 158, and thereby allow the valve actuation member 132 to move up to its inner limit position. When the current is removed, i.e. un-powered state of the actuator 130, the spring 160 releases and deflects the actuator 130 out of its memory shape with low force and simultaneously presses the valve actuation member 132 down to its outer limit position again. Adjustment of the electrical current supplied to actuator 130 also allows to establish intermediate positions of the valve actuation member 132 between its limit positions, e.g. in order to regulate a flow rate in a valve 110.

The advantage of a single channel actuator module 128 with normally closed functionality is that it can hold a valve 110 closed for arbitrary time intervals without consuming any power. This is beneficial especially if a valve 110 is required to be closed most of the time, or a valve 110 is required to be closed in case of power supply failure, e.g. for security reasons.

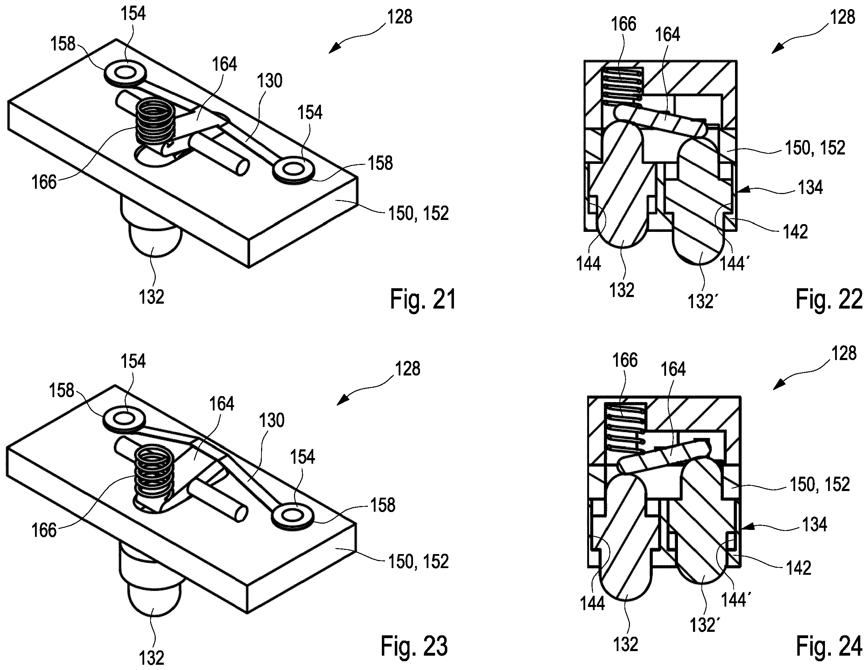

Figure 21 shows a perspective view of a coupled dual channel actuator module 128 that may be used with the actuation unit 120 in a first operation state. Figure 22 shows a cross-sectional view of the dual channel actuator module 128 of Figure 21. Figure 23 shows a perspective view of the dual channel actuator module 128 in a second operation state. Figure 24 shows a cross-sectional view of the dual channel actuator module 128 of Figure 23. Hereinafter, only the differences from the actuator module 128 shown in Figures 9 to 12 will be described and like constructional members and features are indicated by like reference numerals.

The actuator module 128 shown in Figures 21 to 24 comprises at least two valve actuation members 132, 132', i.e. a first valve actuation member 132 and a second valve actuation member 132'. The actuator 130 is configured to selectively move at least one of the two valve actuation members 132, 132'. For this purpose, the actuator module 128 further comprises a rocker member 164. The rocker member 164 mechanically couples the two valve actuation members 132, 132'. Particularly, the rocker memberl64 mechanically couples the two valve actuation members 132, 132' such that the two valve actuation members 132, 132'are moveable into opposite directions. The actuator 130 is coupled to the rocker member 164.

The actuator module 128 further comprises at least one spring 166 coupled to the rocker member 164. The spring 166 is configured to bias the rocker member 164 towards a predetermined rocker member position such that one of the two valve actuation members 132, 132' is biased towards a predetermined valve actuation member position.

The actuator module 128 shown in Figures 21 to 24 is an implementation example of a coupled dual-channel actuator module with monostable functionality. Figure 21 shows a perspective view of the actuator module 128 in powered state and Figure 23 shows a perspective view of the actuator module 128 in an unpowered state. The two valve actuation members 132, 132' are guided in respective valve actuation member guides 144, 144' within the bottom part 142 of the actuator module 128 in such a way that they can freely move between their respective inner limit positions and outer limit positions. In a fully assembled multi valve device 100, the valve actuation member 132, 132' at the outer limit position corresponds to a fully closed valve and valve actuation member 132, 132' at the inner limit position corresponds to a fully open valve 110. Above the valve actuation members 132, 132', the rocker member 164 is arranged to mechanically couple both valve actuation members 132, 132' in such a way, that if one valve actuation member 132, 132' is in its inner limit position, the respective other one can only be in its outer limit position. The actuator 130, pre-deflected from its memory shape away from the rocker member 164, is arranged on one side of the rocker member 164 and the pre-strained spring 166 is arranged on an opposing side of the rocker member 164 in such a way, that actuator 130 and spring 166 are mechanically coupled by the rocker member and counteract each other. The actuator 130 may be mounted on a circuit board 152 by means of rivets 154. Basically, there are different ways of arranging the spring 166 and actuator 130 with respect to the rocker member 164. In this example, the spring 166 and actuator 130 are located above the rocker member 164 so that each can press one side of the rocker member 164 down.

The pre-strain of the spring 166 is dimensioned to provide enough force for pressing first valve actuation member 132, 132' indirectly via the rocker member 164 down to its outer limit position to hold a valve closed against a fluid pressure and at the same time indirectly via the rocker member 164 deflect the actuator 130 out of its memory shape. The actuator 130 and its pre-deflection is positioned and dimensioned in such a way that it can press the second valve actuation member 132' indirectly via the rocker member 164 down do its outer limit position, when heated, e.g. by a sufficiently high electrical heating current applied between its ends 158, and thereby allow the valve actuation member 132 to move up to its inner limit position. Adjustment of the current supplied to actuator 130 also allows to establish intermediate positions of the rocker member and thereby intermediate positions of both valve actuation members 132, 132' between their limit positions, e.g. in order to establish a proportional mixture between two fluids introduced through two valves.

The advantage of a coupled dual-channel actuator module 132 with monostable functionality is that it can hold a first valve 110 closed and a second valve 110 open at the same time for arbitrary time intervals without consuming any power. This is beneficial especially if synchronized switching between a default (first) channel (open for most of the time) and a drain (second) channel (open only for special operations) has to be established. Furthermore, proportional mixing of two fluids in arbitrary mixing ratios can be established by adjustment of power supply to the actuator 130.

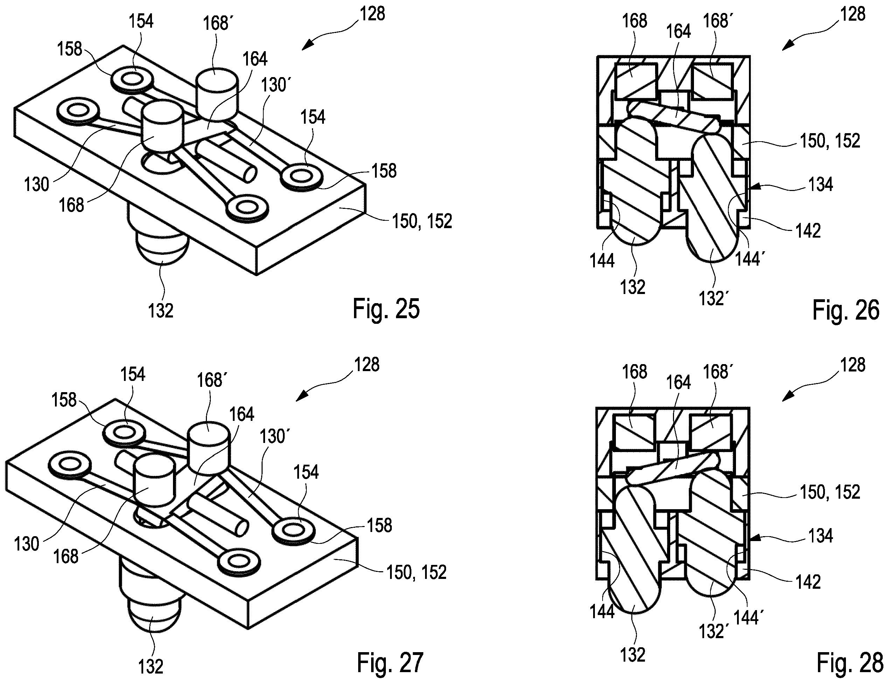

Figure 25 shows a perspective view of a coupled dual channel actuator module 128 that may be used with the actuation unit 120 in a first operation state. Figure 26 shows a cross-sectional view of the dual channel actuator module of Figure 25. Figure 27 shows a perspective view of the dual channel actuator module in a second operation state. Figure 28 shows a cross-sectional view of the dual channel actuator module of Figure 27. Hereinafter, only the differences from the actuator module 128 shown in Figures 21 to 24 will be described and like constructional members and features are indicated by like reference numerals.

The actuator module 128 shown in Figures 25 to 28 comprises at least two actuators 130, 130', i.e. first actuator 130 and second actuator 130', made of a shape memory material. One of the actuators 130, 130' is associated with one of the at least two valve actuation members 132, 132'.

Rather than the spring 166, the actuator module 128 shown in Figures 25 to 28 further comprises at least one magnet member 168, 168' such as a permanent magnet. The magnet member 168, 168' is configured to hold the valve actuation members 132, 132' at a predetermined position. The predetermined position is one of two stable positions. In the shown example, the actuator module 128 comprises two magnet members 168, 168', i.e. a first magnet member 168 and a second magnet member 168'.

The actuator module 128 shown in Figures 25 to 28 is an implementation example of a coupled dual-channel actuator module 128 with bistable functionality. Figure 26 shows a cross-sectional view of the actuator module 128 in a powered state and Figure 28 and shows a cross-sectional view of the actuator module 128 in an unpowered state. The two valve actuation members 132, 132' are guided in respective valve actuation member guides 144 within the bottom part 142 of the actuator module 128 in such a way that they can freely move between their respective inner limit positions and outer limit positions. In a fully assembled multi valve device 100, the valve actuation member 132, 132' at the outer limit position corresponds to a fully closed valve 110 and valve actuation member 132, 132' at the inner limit position corresponds to a fully open valve 110. Above the valve actuation members 132, 132', the rocker member 164 is arranged to mechanically couple both valve actuation members 132, 132' in such a way that if one valve actuation member 132, 132' is in its inner limit position, the respective other one can only be in its outer limit position. The two actuators 130, 130', pre-deflected from their memory shape away from the rocker member 164, are arranged on opposing sides of the rocker member 164 in such a way that the actuators 130, 130' are mechanically coupled by the rocker member 164 and counteract each other. The actuators 130, 130' may be mounted on a circuit board 152 by means of rivets 154. Basically, there are different ways of arranging the actuators 130, 130' with respect to the rocker member 164. In this example, both 130, 130' are placed above the rocker member 164 so that each can press one side of the rocker member 164 down. The rocker member 164 is made of a soft-magnetic material or at least contains soft-magnetic or hard-magnetic elements at its ends. The two permanent magnet members 168, 168' are located above the opposing ends of the rocker member 164 in such a way that each can hold the rocker member 164 in one of two stable positions. The actuators 130, 130' and their pre-deflection are positioned and dimensioned in such a way that each one can pull the rocker member 164 away from one magnet member 168, 168', thereby transferring it from one stable position into the other stable position and deflecting the opposing actuator 130, 130' out of its memory shape.

The advantage of a coupled dual-channel actuator module 128 with bistable functionality is that it can hold either a first valve 110 closed and a second valve open 110, a first valve 110 open and a second valve 110 closed, at the same time for arbitrary time intervals without consuming any power. This is beneficial especially if synchronized switching between two channels 104 has to be established and both of the two possible switching states may have to be maintained for long periods of time. An example for this is flow direction reversal of a pump.

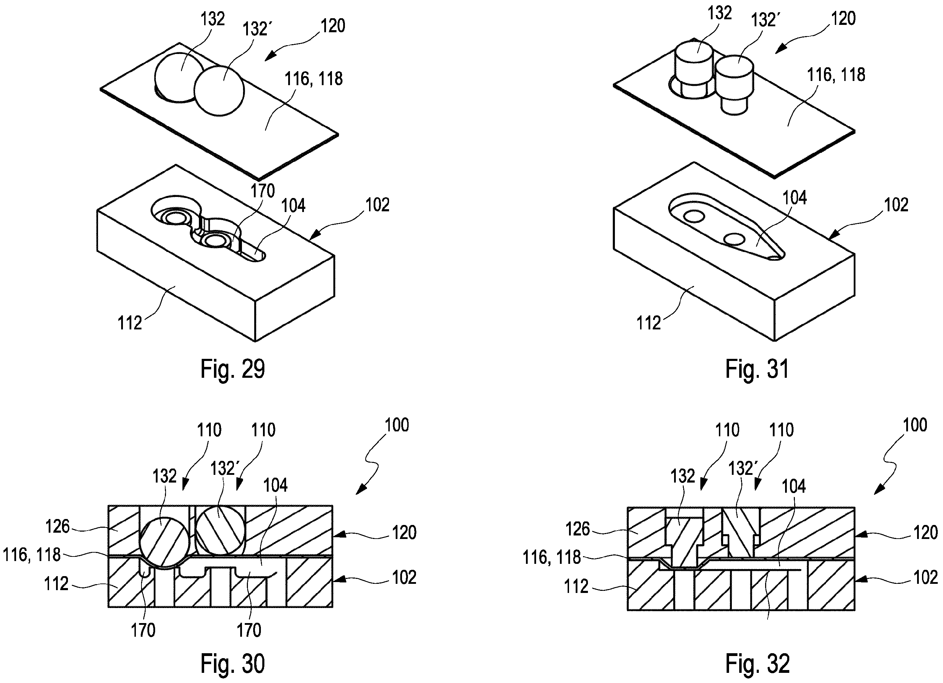

Figure 29 shows a perspective exploded view of parts of a multi valve device 100 according to a further embodiment of the present invention. Figure 30 shows a cross-sectional view of the multi valve device of Figure 29. Hereinafter, only the differences from the multi valve device 100 shown in Figures 1 to 6 will be described and like constructional members and features are indicated by like reference numerals.

The multi valve device 100 shown in parts in Figures 29 and 30 comprises an example of a two-channel actuation module 128 on a portion of a schematic fluidic unit 102. The first valve 110 shown on the left in Figure 30 is in a closed state and the second (right) valve 110' shown on the right is in an open state. The actuator module 128 comprises two valve actuation members 132, 132'. The valve actuation members 132, 132' are designed as spherical valve actuation members 132, 132' and the valves 110, 110' are designed as seat valves with a groove 170 surrounding the valve opening. As is shown in Figure 30, in the closed state, the valve actuation member 132 presses and deforms the membrane 116 towards the groove 170 so as to interrupt a portion of the groove 170.

Figure 31 shows a perspective exploded view of parts of a multi valve device 100 according to a further embodiment of the present invention. Figure 32 shows a cross-sectional view of the multi valve device 100 of Figure 31. Hereinafter, only the differences from the multi valve device 100 shown in Figures 29 and 30 will be described and like constructional members and features are indicated by like reference numerals.

In the multi valve device 100 shown in Figures 31 and 32, the valve actuation members 132, 132' are designed as cylindrical valve actuation members 132, 132' and the valves 110, 110' are designed as seat valves without a groove 170 surrounding the valve opening. The seat valves 110, 110' are asymmetric with respect to flow direction. They can be created with a simple flat design of the sealing membrane 118.

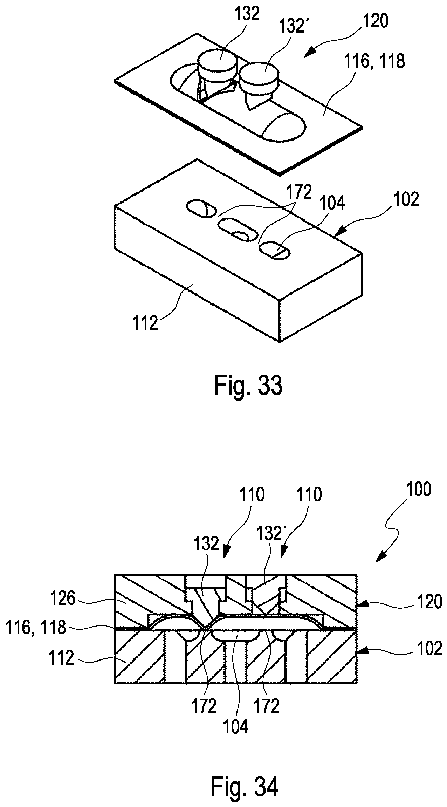

Figure 33 shows a perspective exploded view of parts of a multi valve device 100 according to a further embodiment of the present invention. Figure 34 shows a cross-sectional view of the multi valve device 100 of Figure 33. Hereinafter, only the differences from the multi valve device 100 shown in Figures 29 and 30 will be described and like constructional members and features are indicated by like reference numerals. In the multi valve device 100 shown in Figures 33 and 34, the valve actuation members 132, 132' are designed as wedge-shaped valve actuation members 132, 132' and the valves 110, 110' are designed as diaphragm valves. A diaphragm valve, which is also known as membrane valve, consists of a valve body with two or more ports, an elastomeric diaphragm, and a "weir or saddle" or seat upon which the diaphragm closes the valve. In a closed state, the wedge-shaped valve actuation members 132, 132' is pressing the (3-dimensional) sealing membrane 118 onto a saddle 172 in the fluidic unit 102, which serves as a kind of valve seat, and thereby interrupts the flow between the fluidic inlet 106 and the fluidic outlet 108. The valve 110, 110' can be designed to be symmetric with respect to flow direction, hence the inlets 106 and outlets 108 are interchangeable.

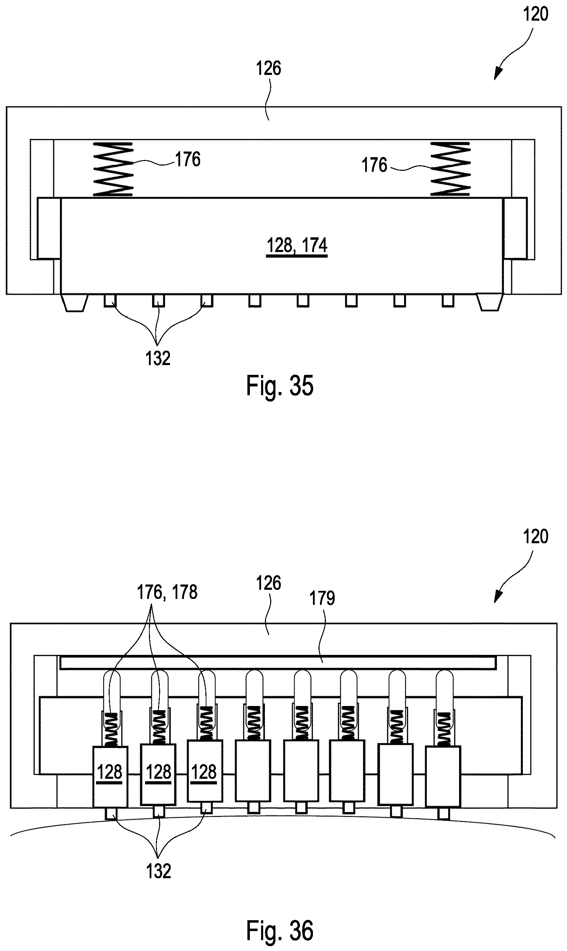

Figure 35 shows a cross-sectional view of parts of an actuation unit 120 according to a further embodiment of the present invention. Hereinafter, only the differences from the actuation unit 120 shown in Figures 1 to 6 will be described and like constructional members and features are indicated by like reference numerals.

The actuation unit shown in Figure 35 is an implementation variant for the interfacing between the actuation unit 120 and fluidic unit 102. Especially in cases, where a multi valve device 100 is used to operate disposable fluidic units or cartridges, which may be changed by an end user, it may be necessary to compensate for mechanical tolerances and uneven surfaces of the fluidic unit 102, leading to an imperfect interface plane 122. For this purpose, a predetermined number such as at least two or all of the actuator modules 128 are formed as a single, monolithic actuator module block 174. In the example shown in Figure 35, eight actuator modules 128 (not shown in detail) and their associated valve actuation members 132, 132' are combined to form an actuator module block 174. The actuator module block 174 is mounted within the housing 126 in such a way that it can move up and down. For this purpose, a spring mechanism 176 configured to bias the at least one actuator module 128 and the actuator module block 174, respectively, towards a stop position within the housing 126 is provided. Particularly, the spring mechanism 176 is located within the housing 126 is pressing the actuator module block 174 towards an inner end stop position. Its force has to be higher than the combined closing forces of all actuator modules 128 within the actuator module block 174. The bottom of the actuator module block 174 is forming the interface plane 122 towards the fluidic unit 102. When mounting the actuation unit 120 to a fluidic unit 102, the spring mechanism 176 allows the actuator module block 174 to accommodate the interface plane 122 of the fluidic unit 102.

Figure 36 shows a cross-sectional view of parts of an actuation unit 120 according to a further embodiment of the present invention. Hereinafter, only the differences from the actuation unit 120 shown in Figure 35 will be described and like constructional members and features are indicated by like reference numerals.

The actuation unit shown in Figure 36 is an implementation variant for the interfacing between the actuation unit 120 and fluidic unit 102. The actuator modules 128 shown in Figure 36 are not combined to an actuator module block 174 but are movably mounted within a housing 126 as individual components. Each actuator module 128 has its own preloaded spring mechanism 176, which might be formed by one or several spring contacts 178. The advantage is that each actuator module 128 can individually accommodate the fluidic interface plane 122, even if it is curved or otherwise deformed. In addition, spring contacts 178 can be used for establishing an electronic connection of the actuators 130 (not shown in detail) to an electronic circuit board 179 with drive electronics and power source. Thus, the electrical connection of the actuators 130 to the electronic circuit board 179 is configured to allow a relative movement of the actuator modules 128 and the electronic circuit board 179 to each other. Particularly, the electrical connection is configured to allow a relative movement of the actuator modules 128 and the electronic circuit board 179 to each other by means of the spring contacts 178. Thereby, any tolerances may be compensated. Alternatively, the electrical connection may be realized by cable connections.

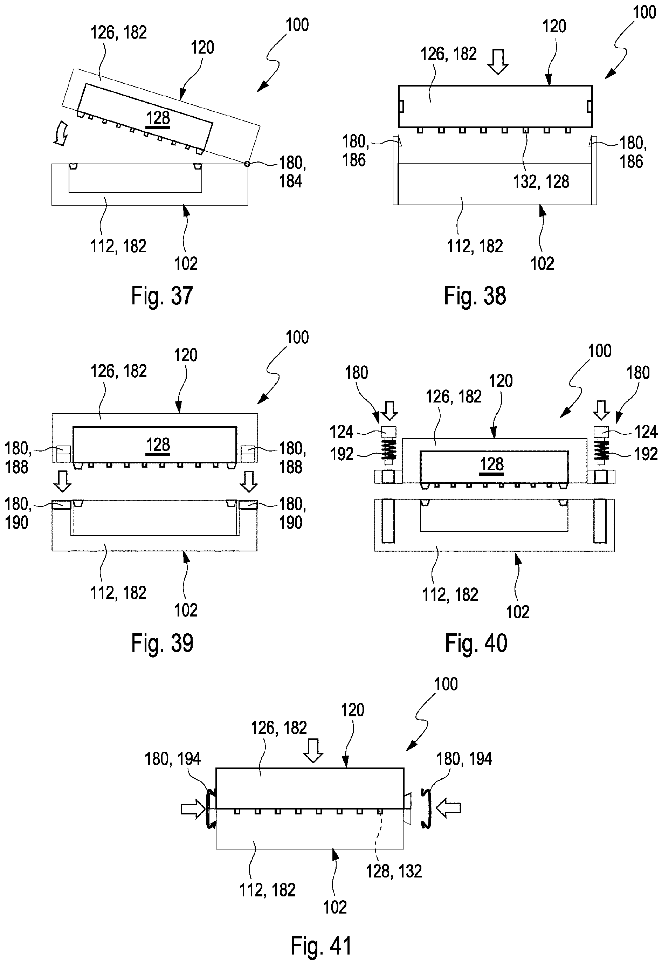

Figure 37 shows a lateral view of a multi valve device 100 according to a further embodiment of the present invention. Hereinafter, only the differences from the actuation unit 120 shown in Figures 1 to 6 will be described and like constructional members and features are indicated by like reference numerals. Figure 37 shows a detachable connection mechanism 180 between the actuation unit 120 and the fluidic unit 102 that allow easy exchange of a disposable fluidic unit 102. In the embodiment shown in Figure 37, a multi valve device frame 182 consisting of two parts connected by a hinge joint 184 is used to press the actuation 120 unit onto the fluidic unit 102.

Figure 38 shows a side view of a multi valve device 100 according to a further embodiment of the present invention. Hereinafter, only the differences from the actuation unit 120 shown in Figure 37 will be described and like constructional members and features are indicated by like reference numerals. In the embodiment shown in Figure 38, the two parts of the multi valve device frame 182 are connected by snap hooks 186.

Figure 39 shows a lateral view of a multi valve device 100 according to a further embodiment of the present invention. Hereinafter, only the differences from the actuation unit 120 shown in Figure 37 will be described and like constructional members and features are indicated by like reference numerals. In the embodiment shown in Figure 39, the two parts of the multi valve device frame 182 are connected by magnetic connectors 188 and magnetic connector counterparts 190.

Figure 40 shows a lateral view of a multi valve device 100 according to a further embodiment of the present invention. Hereinafter, only the differences from the actuation unit 120 shown in Figure 37 will be described and like constructional members and features are indicated by like reference numerals. In the embodiment shown in Figure 40, the two parts of the multi valve device frame 182 are connected by screws 124 similar to the embodiment of Figures 1 to 6 with additional preloaded springs 192.

Figure 41 shows a lateral view of a multi valve device 100 according to a further embodiment of the present invention. Hereinafter, only the differences from the actuation unit 120 shown in Figure 37 will be described and like constructional members and features are indicated by like reference numerals. In the embodiment shown in Figure 41, the two parts of the multi valve device frame 182 are connected by clamps 194.

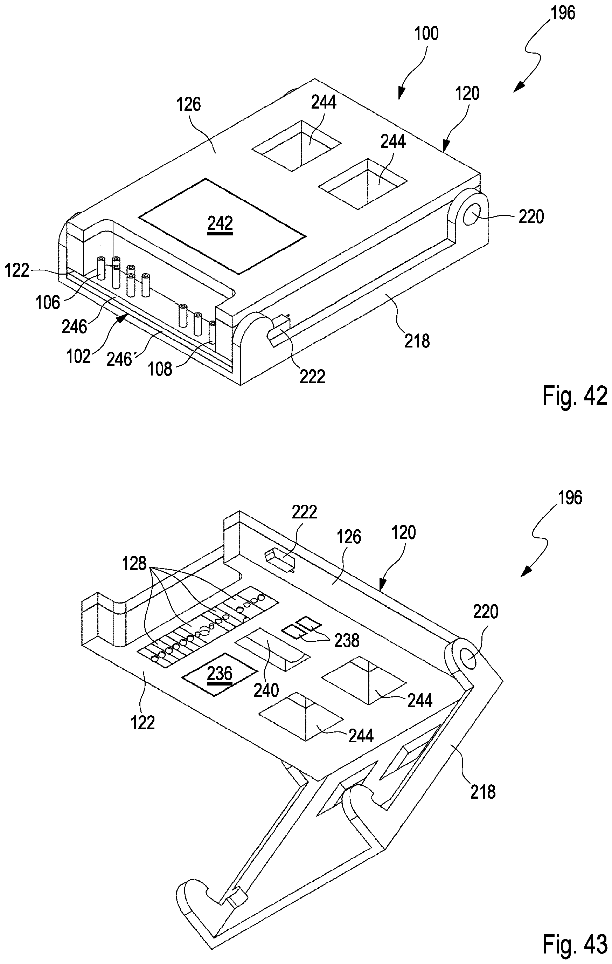

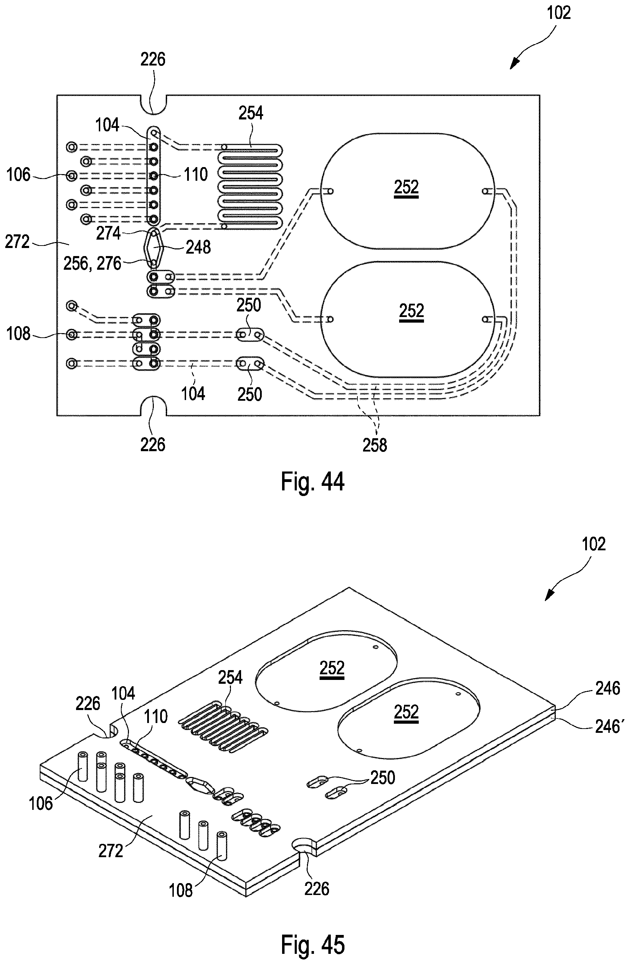

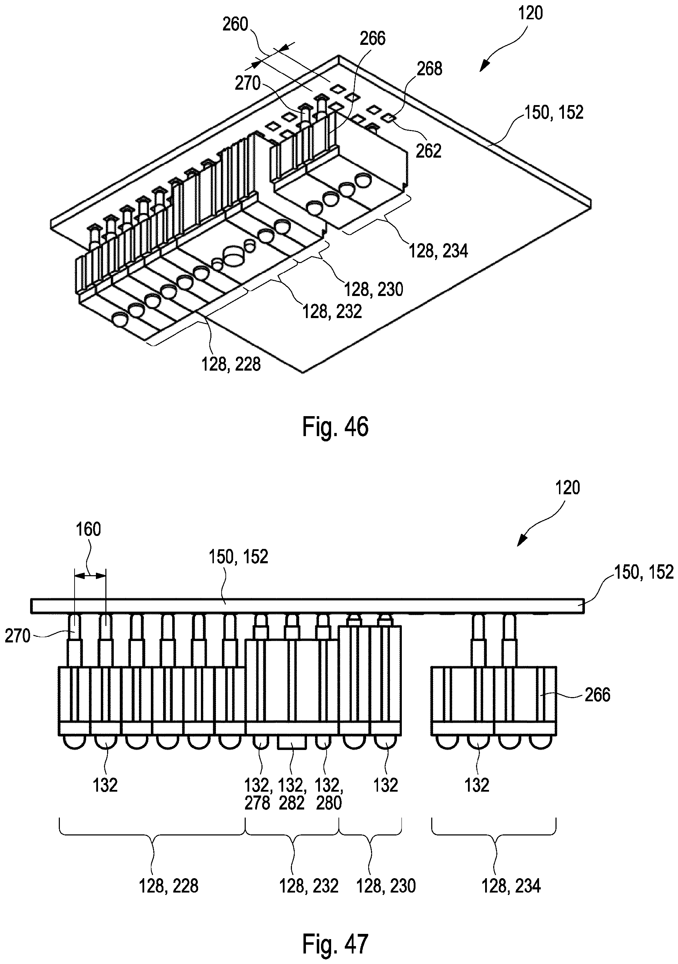

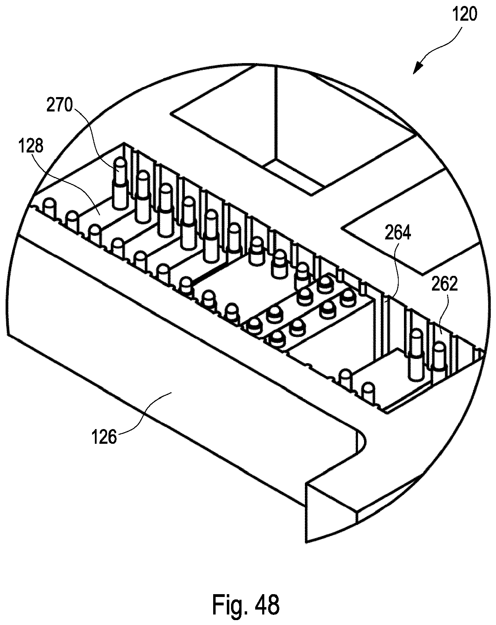

Figure 42 shows a perspective view of a fluid handling device 196 according to a further embodiment of the present invention in a first operation state. Figure 43 shows a perspective view of the fluid handling device 196 of Figure 42 in a second operation state. Figure 44 shows a top view of a part of the fluid handling device 196 of Figure 42. Figure 45 shows a perspective view of a part of the fluid handling device 196 of Figure 42. Figure 46 shows a bottom view of a part of the actuation unit 120 of the fluid handling device 196 of Figure 42. Figure 47 shows a side view of a part of the actuation unit 120 of the fluid handling device 196 of Figure 48. Figure 48 shows an enlarged view of a part of the actuation unit 120 of the fluid handling device 196 of Figure 42.

The fluid handling device 196 shown in Figures 42 to 48 is an implementation of handheld devices performing complex fluid handling tasks on disposable microfluidic chips or cartridges, e.g. medical tests, environmental analysis, food and beverage analysis, cell culture, lab-on-chip, organ-on-chip, PCR (polymerase chain reaction), Peptide synthesis / analysis, Personalized medicine and Point-of-need testing (e.g. for diseases). As an example, the fluid handling device 196 shown in Figures 42 to 48 is an implementation of a two-channel cell culture device.

The actuation unit 120 has a flap 218 mounted on a hinge 220 that can be opened by sliding a lock 222. The flap 218 has alignment elements 224 that allow precise alignment of a fluidic unit 102 having alignment element counterparts 226. A number of actuator modules 128 such as six normally-closed modules 228, two bistable modules 230, a membrane pump actuator module 232 and two coupled monostable dual channel units 234, are mounted in an array formation within the interface plane 122. Furthermore, a heating member 236 and two sensor readout units 238, e.g. optical oxygen sensor readout units, are arranged in the interface plane 122 as well. The actuation unit 120 furthermore has a battery 240 allowing mobile use, a touch screen 242 for experiment control as well as indication of current device status, two optical windows 244 for observation / microscopy of two cell cultures, a charging and data transmission interface (not shown in detail), control electronics for sixteen actuator modules (not shown in detail), a microcontroller (not shown in detail).

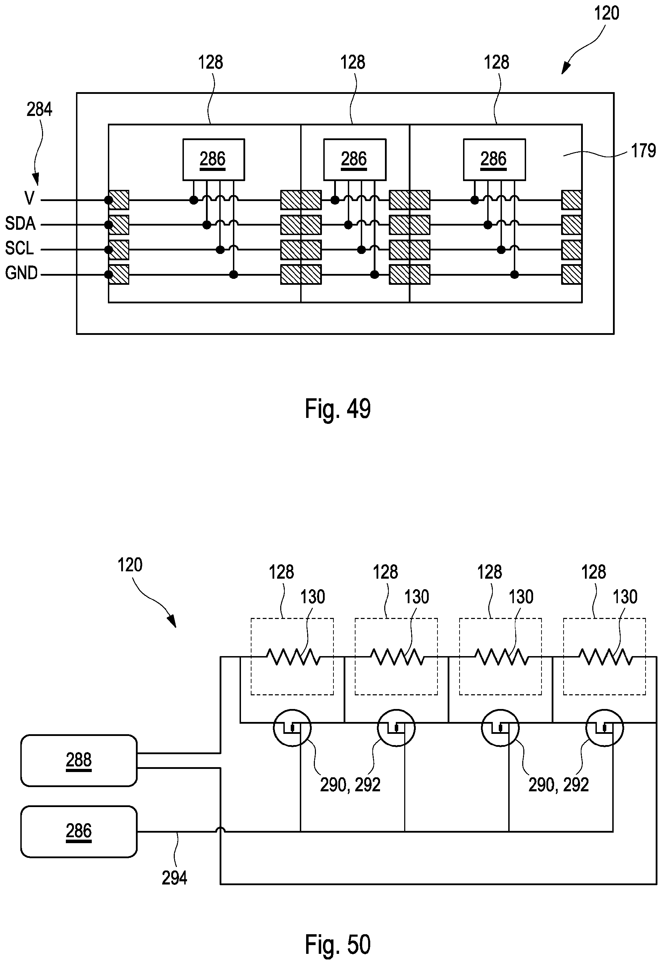

The fluidic unit 102 may be fabricated from a transparent, biocompatible and chemically resistant polymer, e.g. polycarbonate (PC), polymethylmethacrylate (PMMA), polystyrene (PS) or cyclic olefin copolymer (COC), or from glass. In this example, the fluidic unit 102 is formed of two fluidic planes 246, 246' bonded onto each other and covered by a thin elastomer membrane. The upper fluidic plane 246 contains valves 110, a membrane pump chamber 248, sensor chambers 250 and cell culture compartments 252 as indicated by solid lines in Figure 50. The lower plane 246' contains fluidic channels 104 connecting the functional units of the upper fluidic plane 246 as indicated by dashed lines in Figure 50.

The fluidic unit 102 has six inlets 106 that can be used for different input liquids, e.g. cell culture medium, water, saline, ethanol, a drug to be investigated and a colorant to make the effects of the drug on a cell culture visible. The six inlets 106 lead into a common channel 104 through six seat valves 110, each of which is controlled by a normally closed actuation module 228 in the actuation module. The channel 104 leads through a mixer and/or heat exchange interface 254, followed by the membrane pump chamber 248. The outlet 256 of the membrane pump chamber 248 is connected to two valves 110 which in open state further direct the flow into two cell culture compartments 252. The outlet channels 258 of the two cell culture compartments 252 each lead through two sensors (or chambers with sensor integration interface) 260 covered by a sensor membrane, that allow optical readout, e.g. of oxygen concentration and/or pH. The outlet channels 258 then each split and lead into two valves 110. The valves 110 are used as switch valve to direct the outflow of each cell culture compartment 252 either to sample collection at outlet 108, 108' or waste collection at outlet 108". Hence, they are operated by monostable coupled dual actuation modules 230 in order to implement 3/2-way valve behavior.

Figures 46 and 47 show a perspective view and a side view of the individual actuator modules 128 and a simplified depiction of the electronic circuit board 179. All other parts of the actuation unit 120 are left out for better visibility. Figure 48 shows an isometric detail view of the actuation modules 128 mounted in the housing 126 of the actuation unit 120. The actuator modules 128 are all mounted in an array formation with uniform spacing between their valve actuation members 132 or pitch 260. In the example, the housing 126 has a total of 16 slots 262 for the actuator modules 128. Each slot 262 has a pair of linear guide elements 264 that allow to precisely align an actuator module 128 in the interface plane 122 (horizontal plane) while allowing sliding perpendicularly to the interface plane 122, i.e. in operating direction of the valve actuation members 132, with low friction. Each actuator module 128 may occupy one or several of the slots 262 and accordingly has one or several pairs of linear guide counter elements 266. In the example shown here, the first six slots 262, counting from the left in Figure 53, are occupied by normally closed actuation modules 228. The following three slots 262 are occupied by a single membrane pump actuator module 232, the two slots next to these by two bistable actuation modules 230. The next slot 262 is not used by a module and the last four slots 262 are covered by two monostable coupled dual actuation modules 234. Since the actuator modules 128 are designed as individual components, the actuator configuration may be re-configured and individual modules may be exchanged for repair, maintenance or the like, if necessary. The drive electronics (not shown in detail) to supply each of the actuator modules 128 with power are arranged on an electronic circuit board 179. For interfacing with the actuator modules 128, the electronic circuit board 179 has an array of electronic contact pads 268. Four electronic contact pads 268 allowing independent power supply for up to two actuators 130 per actuator module 128 per actuator module slot 262 are arranged in array direction with a pitch 260. Each actuator module 128 has at least two spring contacts 270 on the top side, i.e. the side opposing the interface plane 122, to establish electrical contact of the actuator 130 with the electronic circuit board 179. The bistable actuation modules 230 each have four spring contacts 270 and the membrane pump actuator module 232 has six spring contacts 270.

The routines for powering each supported type of actuator module 128 are implemented or pre-programmed on a microcontroller. For example, a monostable normally closed actuator module requires a short current pulse for quick opening and then a reduced permanent current to keep it open as long as required. For gradual opening, e.g. 50%, on the other hand, the current has to be further reduced. A bistable actuator module requires a short current pulse on one actuator to open, e.g. through the two outer spring contacts 270, and a short current pulse on the second actuator to close, e.g. through the two inner spring contacts 270. A monostable dual channel actuation module may require two actuator module slots 262 for mounting, but only two electrical contacts for the single actuator 130 within the actuator module. A membrane or peristaltic pump requires several actuator module slots for mounting and synchronized application of current to several internal actuators. Finally, actuator module slots may be left empty in case they are not needed in a specific application. Hence, the configuration of actuator modules (types and positions in the array) is preferably also stored on the microcontroller to facilitate correct operation of the whole device.

The different types of actuator modules may have different heights; the length of their spring contacts 270 is chosen accordingly to adapt to the distance between the actuation module's top side and the contact pads 268 on the circuit board 152. As a beneficial side effect, the spring contacts 270 press the actuator modules 128 down towards the bottom of the actuation unit 102 until in full contact to the interface plane 122 of a fluidic unit 102 and thereby help to accommodate even an inclined or curved fluidic unit.

An on-chip membrane pump 272 that is shown as part of the fluid handling device 196 in Figures 42 to 48 is formed by the membrane pump chamber 248 having a membrane pump inlet 274 and a membrane pump outlet 276 covered by a sealing membrane 118 (not shown here) within the fluidic unit 102, and a membrane pump actuator module 232 within the actuation unit 102. The membrane pump actuator module 232 has an inlet valve actuation member 278, and outlet valve actuation member 280 and a pump valve actuation member 282, which are preferably equipped with a normally open actuator mechanism similar to the embodiment shown in Figures 13 to 16.

The pump 272 operates as follows. Firstly, the membrane pump inlet 274 is closed by the inlet valve actuation member 278 while pump valve actuation member 282 and outlet valve actuation member 280 are open, i.e. in their inner limit positions. Then, the pump valve actuation member 282 is moved downwards into its outer limit position, thereby deflecting the sealing membrane 118 and pressing fluid out of the membrane pump chamber 248. Then, the membrane pump outlet 276 is closed by the outlet valve actuation member 280. Then, the pump valve actuation member 282 and inlet valve actuation member 278 are moved upwards into their inner limit positions ("open state"), the sealing membrane 118 can relax into its flat state and thereby suck fluid into the membrane pump chamber 248 through the membrane pump inlet 274. Then, the cycle starts from the beginning. Since the membrane pump 272 is equipped with active valves 110, its flow direction can be reversed, just as a peristaltic pump. The advantages of the pump 272 are as follows. It can be driven by the same type of actuator modules 128 and drive electronics as the valves 110. It is extremely compact. All wetted parts such as pump chamber 248 and sealing membrane 118 can be part of the disposable to omit any risk of contamination. The pump 272 can be used for volumetric dosing. The pump 272 can create a pulsating flow, simulation conditions in a living body. The pump 272 can also be completely open for fluid flow if all valve actuation members 132 of the membrane pump actuator module are retracted to their inner limit positions ("open"). This is useful, if fluid is to be introduced into the fluidic unit by an external pump, e.g. by pressure-driven flow.

Since potentially a high number of individual shape memory actuators is integrated in a multi valve device as described herein, and has to be operated, within a compact housing 126 of the actuation unit 120, challenges may arise from integrating suitable drive electronics allowing to operate each actuator 130 individually. If the electronics are not integrated in the housing 126, another challenge arises from managing the power supply lines such as of all actuators 130.

Figure 49 shows a schematical illustration of electrical components and connections of an actuation unit 120. The embodiment shown in Figure 49 aims at reducing the number of required cables and makes it independent of the number of actuator modules 128. In this embodiment, the actuation unit 120 has a four-core cable 284 such as in the case of I2C protocol representing four electrical lines, comprising a power line V, a common ground line GND, a digital signal line SDA and a digital clock line SCL. Needless to say, other digital protocols may require a different number of signal lines. Thus, the present invention is not limited to the four lines as shown in Figure 49. Within the actuation unit 120, a number of actuator modules 128 of which each may comprise one or several actuators 130 is electrically connected as a cascade to this four-core cable 284. The connection may be established via a plug-in interface, spring contacts or soldering or the like. For this, each actuator module 128 has a four-fold electrical connector on two opposing sides, allowing it to connect to its neighboring actuator modules 128. Within each actuator module 128, the four electrical lines V, SCL, SDA, GND are connected to a microcontroller 286 on an electronic circuit board 179 which may be the same circuit board 150 on which the shape memory actuator(s) 130 are mounted, or a separate electronic circuit board that is electrically connected to the circuit board 150. The microcontroller 286 has the digital communication protocol implemented and is capable of receiving commands as well as sending commands/information via the signal lines V, SCL, SDA, GND. In order to be identifiable via digital communication, each microcontroller 286 is assigned a unique address. The microcontroller 286 is furthermore connected and configured to control each actuator 130 within the actuator module 128. For this purpose, the microcontroller 286 may be connected to a constant current source (not shown in detail in Figure 49) on the same electronic board 179. The constant current source is driven by the electronic lines V and GND and may receive current set values and be switched on/off from the microcontroller 286. Alternatively or in addition, the microcontroller 286 may be configured to perform pulse width modulation (PWM) in order to generate sufficient effective currents for switching each actuator 130 by just switching on/off the connection of the actuator 130 to lines GND and V.

Figure 50 shows a schematical illustration of a further embodiment of an actuation unit 120. The embodiment shown in Figure 50 solves the issue of cable management for a configuration of actuators 130 that all require identical driving currents or current profiles to switch properly. All actuators 130 from one or several actuator modules 128 are electrically connected in series with its two distal ends to a common constant current source 288, whereby each actuator 130 is also bypassed by an electronic switch 290 such as a transistor 292, preferably a field effect transistor such as a MOSFET. The electronic switches 290 are connected to a digital control 294 such as a microcontroller 286 integrated in the actuation unit 120, or an external computer (not shown in detail) that allows to open and close the electrical switch 290. In case all electrical switches 290 are switched to open, the current of the constant current source 288 will sequentially flow through all actuators 130, hence each actuator 130 receives the same current (profile) and is activated at the same time. If, on the other hand, one or several of the electrical switches 290 are closed, current will flow through them due to the lower electrical resistance instead of the corresponding actuator 130, bypassed by the electrical switch 290. This setup allows to selectively drive a high number of actuators 130 with the same current source.

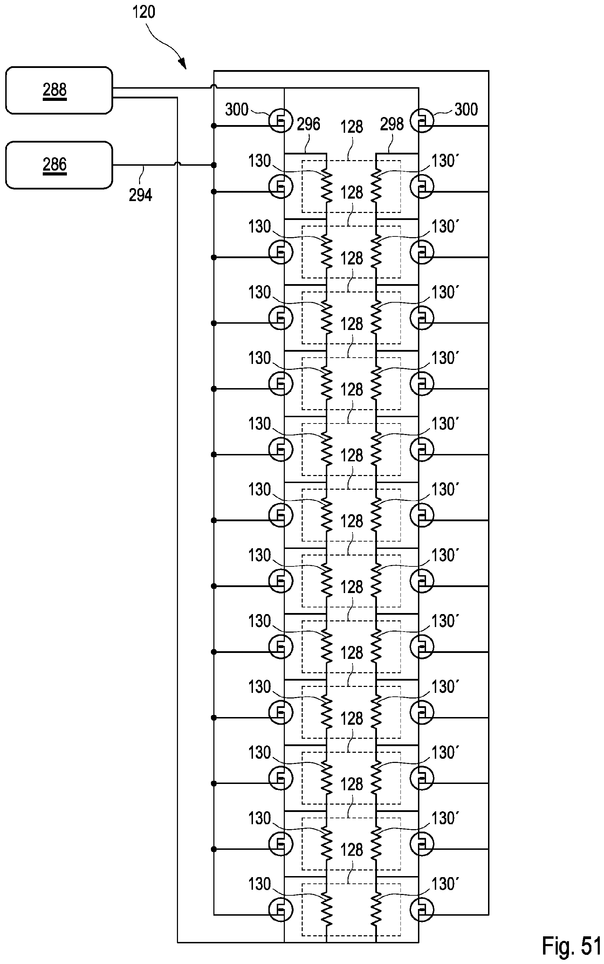

Figure 51 shows a schematical illustration of a further embodiment of an actuation unit 120. The embodiment shown in Figure 51 is a special adaption of the embodiment shown in Figure 50. Hereinafter, only the differences from the embodiment shown in Figure 50 will be described and like constructional members are indicated by like reference numerals. The actuation unit 120 shown in Figure 51 is designed to drive an array of bistable actuator modules 128. In this case, all actuators 130 for opening a bistable valve 110 are connected in a first series 296 such as shown on the left from the valves 110, and all actuators 130' for closing a bistable valve 110 are connected in a second, separate series 298 such as shown on the right of the valves 110. As in the embodiment before, each actuator 130, 130' has an electrical switch 290 connected in parallel. The opening line or first series 296 and the closing line or second series 298 each have an additional electrical switch 300 allowing to activate/deactivate the whole line. This makes particular sense, since in bistable actuator modules 128, the two actuators 130, 130' typically do not need to be switched at the same time.

### List of reference numbers

- 100: multi valve device
- 102: fluidic unit
- 104: channel
- 106: inlet
- 108: outlet
- 110: valve
- 112: fluidic body
- 114: upper side
- 116: sealing member
- 118: sealing membrane
- 120: actuation unit
- 122: interface plane
- 124: screw
- 126: housing
- 128: actuator module
- 130: actuator
- 132: valve actuation member
- 134: frame portion
- 136: front surface
- 138: guide
- 140: alignment element
- 141: alignment element counterpart
- 142: bottom part
- 144: valve actuation member guide
- 146: magnet
- 148: linear guidance
- 150: circuit board
- 152: printed circuit board
- 154: rivet
- 156: end stop
- 158: end
- 160: spring
- 162: pocket
- 164: rocker member
- 166: spring
- 168: magnet member
- 170: groove
- 172: saddle
- 174: actuator module block
- 176: spring mechanism
- 178: spring contact
- 179: electronic circuit board
- 180: connection mechanism
- 182: multi valve device frame
- 184: hinge joint
- 186: snap hook
- 188: magnetic connector
- 190: magnetic connector counterpart
- 192: spring
- 194: clamp
- 196: fluid handling device
- 218: flap
- 220: hinge
- 222: lock
- 224: alignment element
- 226: alignment element counterpart
- 228: normally closed actuation module
- 230: bistable actuation module
- 232: membrane pump actuator module
- 234: monostable coupled dual actuation module
- 236: heating member
- 238: sensor readout unit
- 240: battery
- 242: touch screen
- 244: optical window
- 246: upper fluidic plane
- 246': lower fluidic plane
- 248: membrane pump chamber
- 250: sensor chamber
- 252: cell culture compartment
- 254: mixer and/or heat exchange interface
- 256: outlet
- 258: outlet channel
- 260: pitch
- 262: slot
- 264: linear guide element
- 266: linear guide element counterpart
- 268: electronic contact pad
- 270: spring contact
- 272: membrane pump
- 274: membrane pump inlet
- 276: membrane pump outlet
- 278: inlet valve actuation member
- 280: outlet valve actuation member
- 282: pump valve actuation member
- 284: cable
- 286: microcontroller
- 288: switch
- 290: electrical switch
- 292: transistor
- 294: digital control
- 296: first series
- 298: second series
- 300: additional electrical switch
- V: power line
- SDA: digital signal line
- SCL: digital clock line
- GND: common ground line

## Claims

1. An actuation unit (120) for a multi valve device (100), the multivalve device (100) comprising a fluidic unit (102) comprising at least one fluid channel (104) and a plurality of valves (110), wherein the valves (110, 110') are configured to selectively at least partially block or open the fluid channel (104),
wherein the actuation unit (120) comprises a housing (126) and at least one actuator module, wherein the housing (126) is configured to receive a plurality of actuator modules (128), wherein the at least one actuator module (128) is received within the housing (126), wherein the actuator module (128) comprises at least one actuator (130, 130') made at least partially of a shape memory material, preferably a shape memory alloy, particularly NiTi or a NiTi-based ternary or quaternary alloy, particularly TiNiCu, TiNiHf, TiNiFe, TiNiCr, and at least one valve actuation member, wherein the actuator (130, 130') is configured to move at least one valve actuation member (132, 132') such that at least one of the valves (110, 110') selectively at least partially blocks or opens the fluid channel (104), wherein the actuation unit (120) is connectable to the fluidic unit (102).

2. The actuation unit (120) according to the preceding claim, wherein the actuation unit (120) is releasably connectable to the fluidic unit (102), particularly by means of at least one screw, magnet, snap-fit device, clamping device, latch device or locking device.

3. The actuation unit (120) according to any preceding claim, wherein the actuator module is releasably received within the housing (126).

4. The actuation unit (120) according to any preceding claim, wherein the actuator is formed substantially planar and/or wherein the actuator (130, 130') is formed substantially flat, particularly the actuator comprises a thickness of 10 µm to 200 µm, preferably 15 µm to 180 µm and more preferably 20 µm to 50 µm.

5. The actuation unit (120) according to any preceding claim, wherein the actuation module (128) comprises a frame portion (134) , wherein the frame portion (134) comprises a front surface (136) , wherein the valve actuation member (132, 132') is linearly moveable at least between an inner position, in which the valve actuation member (132, 132') is at least partially retracted into the frame portion (134) with respect to the front surface (136) , and an outer position, in which the valve actuation member (132, 132') at least partially protrudes from the frame portion (134) with respect to the front surface (136) , wherein the frame portion (134) particularly defines at least one guide configured to linearly guide the valve actuation member (132, 132').

6. The actuation unit (120) according to any preceding claim, wherein the valve actuation member (132, 132') has a cylindrical, spherical or wedge shape.

7. The actuation unit (120) according to any preceding claim, wherein the actuator module (128) further comprises at least two actuators (130, 130', 130, 130") made of a shape memory material, wherein the at least two actuators (130, 130', 130, 130") are biased in opposite directions.

8. The actuation unit (120) according to the preceding claim, the actuator module (128) further comprises a rocker member (164) mechanically coupling the two valve actuation members (132, 132'), wherein the actuators (130, 130', 130, 130") are coupled to the rocker member (164).

9. The actuation unit (120) according to any one of claims 1 to 7, the actuator module (128) further comprises at least two valve actuation members (132, 132'), wherein the actuator (130, 130') is configured to selectively move at least one of the two valve actuation members (132, 132').

10. The actuation unit (120) according to the preceding claim, the actuator module (128) further comprises a rocker member (164) mechanically coupling the two valve actuation members (132, 132'), wherein the actuator is coupled to the rocker member (164), wherein the rocker member (164) preferably mechanically couples the two valve actuation members (132, 132') such that the two valve actuation members (132, 132') are moveable into opposite directions.

11. The actuation unit (120) according to the preceding claim, wherein the rocker member (164) mechanically couples the two valve actuation members (132, 132') such that the two valve actuation members (132, 132') are moveable into opposite directions.

12. The actuation unit (120) according to the preceding claim, wherein the actuator module (128) further comprises at least one magnet member, particularly a permanent magnet, wherein the magnet member is configured to hold the rocker member (164) at a predetermined position, particularly one of two stable positions.

13. The actuation unit (120) according to any preceding claim, further comprising an electronic circuit board (179), wherein the electronic circuit board (179) comprises at least one of the elements selected from the group consisting of: at least one power source, particularly an external power source connected by cable, an integrated battery and/or an inductive charging interface, at least one interface device configured to communicate with an external electronic device, particularly an interface device configured to communicate with the external electronic device in a digital, wire-based and/or wireless manner, at least one button, at least one screen, a connector to external power supply, and at least one circuit path mounted thereon, wherein the actuation unit (120) particularly comprises a plurality of actuator modules (128), wherein each of the actuators (130, 130', 130, 130") of the actuator modules (128) is preferably electrically connected to the electronic circuit board (179).

14. The actuation unit (120) according to the preceding claim, wherein each of the actuators (130, 130', 130, 130") of the actuator modules (128) is electrically connected to the electronic circuit board (179), wherein the electrical connection is configured to allow a relative movement of the actuator modules (128) and the electronic circuit board (179) to each other, preferably by means of spring contacts or cable connections.

15. The actuation unit (120) according to any preceding claim, further comprising at least one spring mechanism (176) configured to bias the at least one actuator module (128) towards a stop position within the housing (126) and/or further comprising a position sensor configured to detect a position of the valve actuation, particularly a Hall sensor, capacitive sensor, inductive sensor, resistive sensor, photodiode or laser member, or the actuator is formed as a position sensor.

16. The actuation unit (120) according to any preceding claim, wherein a plurality of actuator modules (128) are connected as a cascade by means of a predetermined number of electrical lines, wherein each actuator module (128) is capable of receiving commands as well as sending commands/information by means of a digital communication protocol.

17. The actuation unit (120) according to any preceding claim, further comprising a plurality of actuators (130, 130', 130, 130") arranged in at least one series, wherein each actuator (130, 130', 130, 130") is bypassed by an electronic switch (290) configured to allow to selectively supply current to one or more of the actuators (130, 130', 130, 130") and to bypass one or more of the actuators (130, 130', 130, 130") with current.

18. A multi valve device (100), comprising a fluidic unit (102) comprising at least one fluid channel (104) and a plurality of valves (110, 110'), wherein the valves (110, 110') are configured to selectively block or open an opening to the fluid channel (104), and at least one actuation unit (120) according to any preceding claim, wherein the actuation unit (120) is connected to the fluidic unit (102).

19. The multi valve device (100) according to the preceding claim, further comprising at least one sealing member (116), wherein each of the valves (110, 110') is covered by the sealing member (116), wherein the sealing member (116) is preferably made of an elastomer, wherein the sealing member (116) is preferably a sealing membrane (118).

20. The multi valve device (100) according to claim 15 or 16, wherein the fluidic unit (102) comprises a common inlet and a common outlet, wherein all valves (110, 110') are in fluid communication with the common inlet and the common outlet.

21. The multi valve device (100) according to any one of the claims referring to a actuation unit (100), further comprising alignment members configured to align the valves (110, 110') from the fluidic unit (102) with the valve actuation members (132, 132') from the actuation unit (120).

22. A fluid handling device (196) comprising a multi valve device (100) according to any one of the claims referring to a multi valve device (100), and at least one fluid source, wherein the fluidic unit (102) is in fluid communication with the at least one fluid source, wherein the fluid handling device (196) preferably further comprises at least one pump configured to supply a fluid from the fluid source to the fluidic unit (102).

23. The fluid handling device (196) according to any one of the preceding claims referring to a fluid handling device (196), wherein the pump is an on-chip membrane pump formed by a membrane pump chamber (248) having a membrane pump inlet (274) and a membrane pump outlet (276) covered by a membrane within the fluidic unit (102), and a membrane pump actuator module (232) within the actuation unit (120) having an inlet valve actuation member (278), an outlet valve actuation member (280) and pump valve actuation member (282).
